# EUROPEAN PATENT APPLICATION

(11) **EP 4 642 072 A1**
(43) Date of publication of application: **29.10.2025**
(21) Application number: 24738515.6
(22) Date of filing: 04.01.2024
(51) Int. Cl.: H04W 12/06

(54) **COMMUNICATION METHOD AND COMMUNICATION APPARATUS**

(30) Priority: 06.01.2023 CN 202310021264
(71) Applicant: Huawei Technologies Co., Ltd., Shenzhen, Guangdong 518129 (CN)
(72) Inventor: WU, Yizhuang, Shenzhen, Guangdong 518129 (CN)
(74) Representative: Epping - Hermann - Fischer
(86) International application number: PCT/CN2024/070490
(87) International publication number: WO 2024/146582

(57) **Abstract**

Embodiments of this application provide a communication method and a communication apparatus, applied to a process of establishing or modifying a session of a terminal device. The method includes: A visited session management function network element obtains security information of a visited DNS server and an identifier of the DNS server, sends the security information and the identifier of the DNS server to a home session management function network element, receives, from the home session management function network element, a PCO including the security information and the identifier of the DNS server, and then sends the PCO to the terminal device. In the solution disclosed in this application, the visited session management function network element exchanges the security information with the home session management function network element, and then the home session management function network element sends the security information to the terminal device, so that the terminal device can establish a secure connection to the DNS server based on the security information, thereby improving network communication security.

## Description

This application claims priority to Chinese Patent Application No. 202310021264.4, filed with the China National Intellectual Property Administration on January 6, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication method.

### BACKGROUND

In an edge-computing network system architecture, user equipment (user equipment, UE) is supported in accessing an edge hosting environment (edge hosting environment, EHE) in a visited public land mobile network (visited public land mobile network, VPLMN).

In a roaming scenario, the UE may initiate a registration procedure and a protocol data unit (protocol data unit, PDU) session establishment procedure to a visited network, to establish a network connection for accessing the visited EHE. In this case, the UE may interact with a visited domain name system (domain name system, DNS) server to obtain an address of an application server in the visited EHE. How to protect communication security between the UE and the DNS server is a problem that needs to be considered currently.

### SUMMARY

This application provides a communication method and a communication method, to protect communication security between a visited DNS server and a communication apparatus.

According to a first aspect, a communication method is provided. The method may be performed by a visited session management function network element (for example, a Visited-session management function, V-SMF, V-SMF for short), or may be performed by a chip or a circuit used in the V-SMF. This is not limited in this application. For ease of description, that the method is performed by the V-SMF is used as an example for description below.

The method includes: A visited session management function network element obtains security information of a visited domain name system DNS server and an identifier of the DNS server, where the security information is for establishing a secure connection between a terminal device and the DNS server; the visited session management function network element sends the security information and the identifier of the DNS server to a home session management function network element; the visited session management function network element receives a protocol configuration option (protocol configuration options, PCO) from the home session management function network element, where the PCO includes the security information and the identifier of the DNS server; and the visited session management function network element sends the PCO to the terminal device.

For example, the visited DNS server may be a visited edge server discovery function (V-edge application server discovery function, V-EASDF) network element. It may be understood that the V-EASDF in this embodiment of this application is an enhanced DNS server, and the V-EASDF can support all functions of the DNS server, and is additionally enhanced. Therefore, for a subsequent specific implementation in which the UE performs a server discovery procedure by interacting with the V-EASDF based on the security information, refer to a current implementation of interaction between the UE and the DNS server. For brevity, details are not described herein again.

It should be noted that the technical solution of this application is mainly for a roaming scenario, and is applied to a process of establishing or modifying a session of the terminal device, that is, a process of establishing or modifying a PDU session of the terminal device when the terminal device is located in a visited place.

According to the solution provided in this application, the visited session management function network element obtains the security information, and exchanges the security information with the home session management function network element; and further, obtains the PCO including the security information from the home session management function network element, and sends the PCO to the terminal device, so that the terminal device can establish a secure connection to the DNS server based on the security information, thereby improving security performance of communication between the terminal device and the DNS server.

With reference to the first aspect, in some implementations of the first aspect, the security information includes a credential for authenticating the DNS server.

Based on this implementation, the credential of the DNS server is added to the security information, so that authentication is performed on the DNS server in a process of establishing the secure connection between the terminal device and the DNS server, thereby ensuring network communication security.

With reference to the first aspect, in some implementations of the first aspect, the security information further includes one or more security protocol types supported by the DNS server and/or a port number for establishing the secure connection.

Based on this implementation, the security protocol types supported by the DNS server and/or the port number for establishing the secure connection are/is added to the security information, so that it can be ensured that the terminal device and the DNS server establish the secure connection by using a correct security protocol and/or the port number, thereby ensuring efficiency of establishing the communication security connection.

With reference to the first aspect, in some implementations of the first aspect, before the visited session management function network element receives the PCO from the home session management function network element, the visited session management function network element sends, to the home session management function network element, the one or more security protocol types supported by the DNS server and/or the port number for establishing the secure connection; and the PCO further includes one or more security protocol types in the one or more security protocol types supported by the DNS server and/or the port number.

Based on this implementation, the security protocol types supported by the DNS server and/or the port number for establishing the secure connection are/is added to the PCO, so that it can be ensured that the terminal device and the DNS server establish the secure connection by using a correct security protocol and/or the port number, thereby ensuring efficiency of establishing the communication security connection.

With reference to the first aspect, in some implementations of the first aspect, the PCO from the home session management function network element is a first PCO. Before the visited session management function network element obtains the security information of the visited DNS server, the visited session management function network element receives a second PCO from the terminal device, where the second PCO includes indication information indicating that the terminal device supports security protocol-based security protection on a DNS message; the visited session management function network element sends the second PCO to the home session management function network element; and the visited session management function network element receives a request message from the home session management function network element, where the request message includes the indication information indicating that the terminal device supports security protocol-based security protection on a DNS message. That the visited session management function network element obtains the security information of the visited DNS server includes: The visited session management function network element obtains the security information in response to the indication information.

Based on this implementation, the indication information carried in the second PCO and indicating that the terminal device supports security protocol-based security protection on a DNS message is sent to the visited session management function network element via the home session management function network element. In this way, the visited session management function network element determines and obtains the security information of the DNS server based on the request message sent by the home session management function network element. This increases considerations or bases for the visited session management function network element to obtain the security information of the DNS server, so that a network can obtain security information on demand.

With reference to the first aspect, in some implementations of the first aspect, before the visited session management function network element obtains the security information of the visited DNS server and the identifier of the DNS server, the visited session management function network element receives a home routed session breakout (home routed session breakout, HR-SBO) allowed indication from a mobility and access management function network element. That the visited session management function network element obtains the security information of the visited DNS server and the identifier of the DNS server includes: The visited session management function network element obtains the security information and the identifier of the DNS server based on the HR-SBO allowed indication.

Based on this implementation, the visited session management function network element determines and obtains the security information of the DNS server and the identifier of the DNS server based on the HR-SBO allowed indication sent by the mobility and access management function network element. This increases considerations or bases for the visited session management function network element to obtain the security information of the DNS server and the identifier of the DNS server, so that a network can obtain security information on demand.

With reference to the first aspect, in some implementations of the first aspect, that the visited session management function network element obtains the security information of the visited DNS server includes: The visited session management function network element obtains the security information based on local configuration information.

With reference to the first aspect, in some implementations of the first aspect, before the visited session management function network element obtains the security information of the visited DNS server, the visited session management function network element receives a home network identity from the home session management function network element. That the visited session management function network element obtains the security information of the visited DNS server includes: The visited session management function network element obtains the security information based on the network identity of the terminal device.

Based on this implementation, the visited session management function network element determines and obtains the security information of the DNS server based on the local configuration information or the home network identity sent by the home session management function network element. This increases considerations or bases for the visited session management function network element to obtain the security information of the DNS server, so that a network can obtain accurate security information.

With reference to the first aspect, in some implementations of the first aspect, the visited session management function network element obtains policy information, where the policy information indicates a trigger condition for the home session management function network element to send the security information to the terminal device; and the visited session management function network element sends the policy information to the home session management function network element.

Based on this implementation, the visited session management function network element sends the policy information to the home session management function network element. This adds the trigger condition for the home session management function network element to send the security information to the terminal device, so that a network can provide the security information to the terminal device as required.

With reference to the first aspect, in some implementations of the first aspect, before the visited session management function network element obtains the security information of the visited DNS server, the visited session management function network element receives a user plane security policy that corresponds to the session and that is from the home session management function network element, where the user plane security policy indicates to disable or optionally enable user plane security protection. That the visited session management function network element obtains the security information of the visited DNS server includes: The visited session management function network element obtains the security information based on the user plane security policy.

Based on this implementation, the visited session management function network element determines and obtains the security information of the DNS server based on the user plane security policy sent by the home session management function network element. This increases considerations or bases for the visited session management function network element to obtain the security information of the DNS server, so that a network can obtain the security information as required.

With reference to the first aspect, in some implementations of the first aspect, before the visited session management function network element obtains the security information of the visited DNS server and the identifier of the DNS server, the visited session management function network element receives HR-SBO authorization information from the home session management function network element. That the visited session management function network element obtains the security information of the visited DNS server and the identifier of the DNS server includes: The visited session management function network element obtains the security information and the identifier of the DNS server based on the HR-SBO authorization information.

Based on this implementation, the visited session management function network element needs to determine and obtain the security information and the identifier of the DNS server based on the HR-SBO authorization information from the home session management function network element. This increases considerations or bases for the visited session management function network element to obtain the security information of the DNS server and the identifier of the DNS server, so that obtaining the security information is more secure.

With reference to the first aspect, in some implementations of the first aspect, that the visited session management function network element obtains the security information and the identifier of the DNS server based on the HR-SBO authorization information includes: The visited session management function network element obtains, when determining that the terminal device meets an HR-SBO session establishment condition, the security information and the identifier of the DNS server based on the HR-SBO authorization information.

Based on this implementation, the visited session management function network element needs to determine and obtain, only when determining that the terminal device meets the HR-SBO session establishment condition, the security information and the identifier of the DNS server based on the HR-SBO authorization information from the home session management function network element. Therefore, security is higher.

With reference to the first aspect, in some implementations of the first aspect, the visited session management function network element receives the security information from a network function repository function network element.

According to a second aspect, a communication method is provided. The method may be performed by a home session management function network element (for example, a home management function (HPLMN-SMF), H-SMF for short), or may be performed by a chip or a circuit used in the H-SMF. This is not limited in this application. For ease of description, that the method is performed by the H-SMF is used as an example for description below.

The method includes: A home session management function network element receives security information of a domain name system DNS server and an identifier of the DNS server from a visited session management function network element, where the security information is for establishing a secure connection between a terminal device and the DNS server; the home session management function network element generates a PCO, where the PCO includes the security information and the identifier of the DNS server; and the home session management function network element sends the PCO to the terminal device via the visited session management function network element.

For example, the DNS server is an edge server discovery function network element.

It should be noted that the technical solution of this application is mainly for a roaming scenario, and is applied to a process of establishing or modifying a session of the terminal device, that is, a process of establishing or modifying a PDU session of the terminal device when the terminal device is located in a visited place.

According to the solution provided in this application, the home session management function network element exchanges the security information with the visited session management function network element, and further sends the PCO including the security information to the terminal device, so that the terminal device can establish the secure connection to the DNS server based on the security information, thereby ensuring network communication security.

With reference to the second aspect, in some implementations of the second aspect, the security information includes a credential for authenticating the DNS server.

Based on this implementation, the credential of the DNS server is added to the security information, so that authentication is performed on the DNS server in a process of establishing the secure connection between the terminal device and the DNS server. This can improve security performance of communication between the terminal device and the DNS server.

With reference to the second aspect, in some implementations of the second aspect, the security information further includes one or more security protocol types supported by the DNS server and/or a port number for establishing the secure connection.

Based on this implementation, the security protocol types supported by the DNS server and/or the port number for establishing the secure connection are/is added to the security information, so that it can be ensured that the terminal device and the DNS server establish the secure connection by using a correct security protocol and/or the port number, thereby ensuring efficiency of establishing the communication security connection.

With reference to the second aspect, in some implementations of the second aspect, before the home session management function network element sends the PCO to the visited session management function network element, the home session management function network element receives one or more security protocol types supported by the DNS server and/or a port number for establishing the secure connection that are/is from the visited session management function network element. The PCO further includes one or more security protocol types in the one or more security protocol types supported by the DNS server and/or the port number.

Based on this implementation, the security protocol types supported by the DNS server and/or the port number for establishing the secure connection are/is added to the PCO, so that it can be ensured that the terminal device and the DNS server establish the secure connection by using a correct security protocol or the port number, thereby ensuring efficiency of establishing the communication security connection.

With reference to the second aspect, in some implementations of the second aspect, the home session management function network element sends a subscriber data management request message to a unified data management function network element; and the home session management function network element receives a subscriber data management response message from the unified data management function network element, where the subscriber data management response message includes HR-SBO authorization information. That the home session management function network element generates the PCO includes: The home session management function network element generates the PCO in response to the HR-SBO authorization information.

Based on this implementation, the home location needs to query subscription data from the unified data management function network element, and generates the PCO when determining an HR-SBO session authorized, so that secure communication between the terminal device and the DNS server can be ensured.

With reference to the second aspect, in some implementations of the second aspect, before the home session management function network element receives the security information of the DNS server and the identifier of the DNS server from the visited session management function network element, the home session management function network element sends the HR-SBO authorization information to the visited session management function network element, where the HR-SBO authorization information is for requesting the security information and the identifier of the DNS server.

Based on this implementation, the visited session management function network element needs to determine and obtain the security information and the identifier of the DNS server based on the HR-SBO authorization information from the home session management function network element. This increases considerations or bases for the visited session management function network element to obtain the security information of the DNS server and the identifier of the DNS server, so that a network can obtain the security information as required.

With reference to the second aspect, in some implementations of the second aspect, the PCO generated by the home session management function network element is a first PCO. Before the home session management function network element generates the PCO, the home session management function network element receives a second PCO from the visited session management function network element, where the second PCO includes indication information indicating that the terminal device supports security protocol-based security protection on a DNS message; and the home session management function network element sends a request message to the visited session management function network element, where the request message includes the indication information.

Based on this implementation, the indication information carried in the second PCO and indicating that the terminal device supports security protocol-based security protection on a DNS message is sent to the visited session management function network element via the home session management function network element. In this way, the visited session management function network element determines and obtains the security information of the DNS server based on the request message sent by the home session management function network element. This increases considerations or bases for the visited session management function network element to obtain the security information of the DNS server, so that a network can obtain security information on demand.

With reference to the second aspect, in some implementations of the second aspect, the second PCO further includes one or more security protocol types supported by the terminal device. That the home session management function network element generates the PCO includes: The home session management function network element generates the first PCO based on the one or more security protocol types supported by the terminal device and carried in the second PCO and the one or more security protocol types supported by the DNS server, where the PCO includes one or more security protocol types in one or more security protocol types supported by both the DNS server and the terminal device.

Based on this implementation, the home session management function network element finally determines, based on the one or more security protocol types supported by the DNS server and the one or more security protocol types supported by the terminal device, the one or more security protocol types that are carried in the first PCO and that are supported by both the DNS server and the terminal device. The security protocol types supported by both the DNS server and the terminal device and/or the port number for establishing the secure connection are/is added to the first PCO, so that it can be ensured that the terminal device and the DNS server establish the secure connection by using a correct security protocol and/or the port number, thereby ensuring efficiency of establishing the communication security connection.

With reference to the second aspect, in some implementations of the second aspect, before the home session management function network element generates the PCO, the home session management function network element sends a user plane security policy to the visited session management function network element, where the user plane security policy is for determining the security information, and the user plane security policy indicates to disable or optionally enable user plane security protection.

Based on this implementation, the visited session management function network element determines and obtains the security information of the DNS server based on the user plane security policy sent by the home session management function network element. This increases considerations or bases for the visited session management function network element to obtain the security information of the DNS server, so that a network can obtain the security information as required.

With reference to the second aspect, in some implementations of the second aspect, before the home session management function network element generates the PCO, the home session management function network element sends a home network identity to the visited session management function network element, where the home network identity is for determining the security information.

Based on this implementation, the visited session management function network element determines and obtains the security information of the DNS server based on the local configuration information or the home network identity sent by the home session management function network element. This increases considerations or bases for the visited session management function network element to obtain the security information of the DNS server, so that a network can obtain the security information as required.

With reference to the second aspect, in some implementations of the second aspect, that the home session management function network element generates the PCO includes: The home session management function network element receives policy information from the visited session management function network element, where the policy information indicates a trigger condition for the home session management function network element to send the security information to the terminal device; and the home session management function network element generates the PCO when the trigger condition is met.

Based on this implementation, the visited session management function network element sends the policy information to the home session management function network element. This adds the trigger condition for the home session management function network element to send the security information to the terminal device, so that a network can provide the security information to the terminal device as required.

According to a third aspect, a communication method is provided. The method may be performed by a communication apparatus. Optionally, the communication apparatus may be a terminal device, such as a mobile phone, a car, an uncrewed aerial vehicle, or a wearable device, or may be a chip in the terminal device. In addition, the terminal device may also be referred to as user equipment. Therefore, the communication apparatus may also be user equipment or a chip in the user equipment. This is not specifically limited in this application.

The method includes: The communication apparatus sends a second PCO to a home session management function network element via a visited session management function network element, where the second PCO includes indication information indicating that the communication apparatus supports security protocol-based security protection on a DNS message; the communication apparatus receives a first PCO from the home session management function network element via the visited session management function network element, where the first PCO includes security information and an identifier of a visited domain name system DNS server; and the communication apparatus establishes a secure connection to the DNS server based on the security information.

For example, the DNS server is an edge server discovery function network element.

It should be noted that the technical solution of this application is mainly for a roaming scenario, and is applied to a process of establishing or modifying a session of the terminal device, that is, a process of establishing or modifying a PDU session of the terminal device when the terminal device is located in a visited place.

According to the solution provided in this application, the communication apparatus obtains, from the home session management function network element, the PCO including the security information, and establishes the secure connection to the DNS server based on the security information. This can improve security performance of communication between the communication apparatus and the DNS server.

With reference to the third aspect, in some implementations of the third aspect, the security information includes a credential for authenticating the DNS server.

Based on this implementation, the credential of the DNS server is added to the security information, so that authentication is performed on the DNS server in a process of establishing the secure connection between the communication apparatus and the DNS server, thereby ensuring network communication security.

With reference to the third aspect, in some implementations of the third aspect, the security information further includes one or more security protocol types supported by the DNS server and/or a port number for establishing the secure connection.

Based on this implementation, the security protocol types supported by the DNS server and/or the port number for establishing the secure connection are/is added to the security information, so that it can be ensured that the communication apparatus and the DNS server establish the secure connection by using a correct security protocol and/or the port number, thereby ensuring efficiency of establishing the communication security connection.

With reference to the third aspect, in some implementations of the third aspect, the second PCO further includes one or more security protocol types supported by the communication apparatus; and the first PCO further includes one or more security protocol types in the one or more security protocol types supported by the DNS server and/or the port number.

According to a fourth aspect, a visited session management function network element, for example, a V-SMF, is provided. The network element includes: a processing unit, configured to obtain security information of a visited domain name system DNS server and an identifier of the DNS server, where the security information is for establishing a secure connection between a terminal device and the DNS server; and a transceiver unit, configured to send the security information and the identifier of the DNS server to a home session management function network element. The transceiver unit is further configured to receive a PCO from the home session management function network element, where the PCO includes the security information and the identifier of the DNS server. The transceiver unit is further configured to send the PCO to the terminal device. The transceiver unit may perform receiving and sending in the first aspect, and the processing unit may perform processing other than receiving and sending in the first aspect.

According to a fifth aspect, a home session management function network element, for example, an H-SMF, is provided. The network element includes: a transceiver unit, configured to receive security information of a domain name system DNS server and an identifier of the DNS server from a visited session management function network element, where the security information is for establishing a secure connection between a terminal device and the DNS server; and a processing unit, configured to generate a PCO, where the PCO includes the security information and the identifier of the DNS server. The transceiver unit is further configured to send the PCO to the visited session management function network element.

The transceiver unit may perform receiving and sending in the second aspect, and the processing unit may perform processing other than receiving and sending in the second aspect.

According to a sixth aspect, a terminal device, for example, UE, is provided. The apparatus includes: a transceiver unit, configured to send a second PCO to a visited session management function network element, where the second PCO includes indication information indicating that the terminal device supports security protocol-based security protection on a DNS message, where the transceiver unit is further configured to receive a first PCO from the visited session management function network element, where the first PCO includes security information and an identifier of a DNS server; and a processing unit, configured to establish a secure connection to the DNS server based on the security information.

The transceiver unit may perform receiving and sending in the third aspect, and the processing unit may perform processing other than receiving and sending in the third aspect.

According to a seventh aspect, a communication apparatus is provided, and includes a transceiver, a processor, and a memory. The processor is configured to control the transceiver to send and receive a signal. The memory is configured to store a computer program. The processor is configured to invoke the computer program from the memory and run the computer program, to enable the communication apparatus to perform the method according to any one of the first aspect, the second aspect, the third aspect, or the possible implementations of first aspect, the second aspect, or the third aspect.

Optionally, there are one or more processors, and there are one or more memories.

Optionally, the memory may be integrated with the processor, or the memory and the processor are separately disposed.

Optionally, the communication apparatus further includes a transmitter machine (transmitter) and a receiver machine (receiver).

According to an eighth aspect, a communication system is provided, and includes one or more of the terminal device (for example, the UE), the home session management function network element H-SMF, and the visited session management function network element V-SMF described above.

According to a ninth aspect, a computer-readable storage medium is provided. The computer-readable storage medium stores a computer program or code. When the computer program or code is run on a computer, the computer is enabled to perform the method according to any one of the first aspect, the second aspect, the third aspect, or the possible implementations of first aspect, the second aspect, or the third aspect.

According to a tenth aspect, a chip is provided, and includes at least one processor. The at least one processor is coupled to a memory, the memory is configured to store a computer program, and the processor is configured to invoke the computer program from the memory and run the computer program, to enable a terminal device on which the chip system is installed to perform the method according to any one of the first aspect, the second aspect, the third aspect, or the possible implementations of first aspect, the second aspect, or the third aspect.

The chip may include an input circuit or interface for sending information or data and an output circuit or interface for receiving information or data.

According to an eleventh aspect, a computer program product is provided. The computer program product includes computer program code. When the computer program code is run by a terminal device, the terminal device is enabled to perform the method according to any one of the first aspect, the second aspect, the third aspect, or the possible implementations of first aspect, the second aspect, or the third aspect.

### BRIEF DESCRIPTION OF DRAWINGS

FIG. 1 is a diagram of a network architecture to which embodiments of this application are applicable;
FIG. 2 is a schematic flowchart of establishing an HR-SBO PDU session according to an embodiment of this application;
FIG. 3 is a schematic flowchart of a communication method 300 according to an embodiment of this application;
FIG. 4 is a schematic flowchart of a communication method 400 according to an embodiment of this application;
FIG. 5 is a schematic flowchart of a communication method 500 according to an embodiment of this application;
FIG. 6 is a schematic flowchart of a communication method 600 according to an embodiment of this application;
FIG. 7 is a schematic flowchart of a communication method 700 according to an embodiment of this application;
FIG. 8 is a schematic flowchart of a communication method 800 according to an embodiment of this application;
FIG. 9 is a diagram of a structure of a terminal device 1000 according to an embodiment of this application;
FIG. 10 is a diagram of a structure of another terminal device 2000 according to an embodiment of this application; and
FIG. 11 is a diagram of a structure of a chip system 3000 according to an embodiment of this application.

### DESCRIPTION OF EMBODIMENTS

The following describes technical solutions of this application with reference to accompanying drawings.

The technical solutions provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or other communication systems.

In a communication system, a part operated by an operator may be referred to as a PLMN, or may be referred to as an operator network or the like. The PLMN is a network established and operated by a government or an operator approved by the government to provide a land mobile communication service for the public, and is mainly a public network in which a mobile network operator (mobile network operator, MNO) provides a mobile broadband access service for a user. The PLMN described in embodiments of this application may be specifically a network compliant with a 3rd generation partnership project (3rd generation partnership project, 3GPP) standard requirement, which is referred to as a 3GPP network for short. The 3GPP network usually includes but is not limited to a 5G network, a 4th-generation (4th-generation, 4G) mobile communication network, and another future communication system, for example, a 6th-generation (6th-generation, 6G) network.

For ease of description, the 5G network is used as an example for description in embodiments of this application.

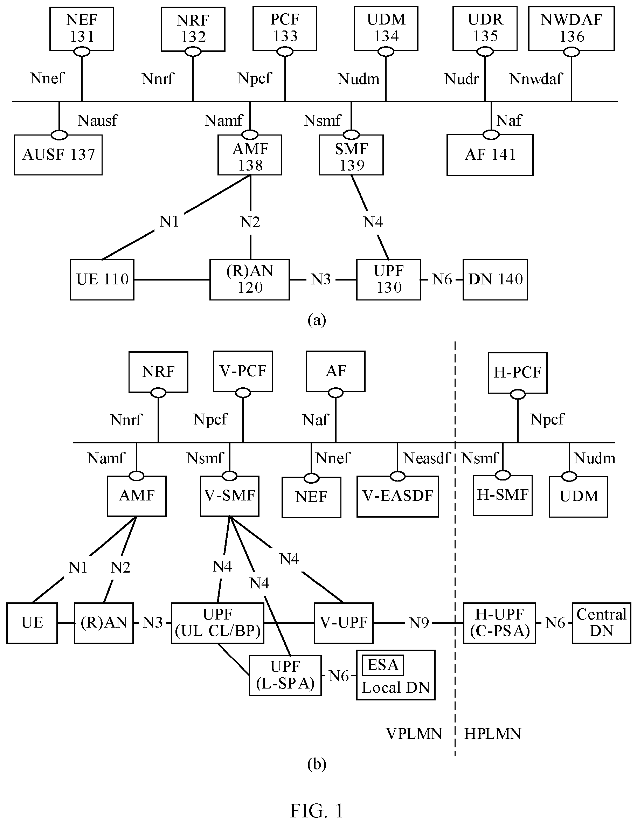

FIG. 1 is a diagram of a network architecture to which embodiments of this application are applicable. As shown in (a) in FIG. 1, the network architecture may specifically include three parts: a terminal device part, a data network (data network, DN) part, and an operator network PLMN part. The following briefly describes functions of network elements of the parts.

The terminal device part may include a terminal device 110, and the terminal device 110 may also be referred to as user equipment (user equipment, UE). The terminal device 110 in this application is a device having wireless sending and receiving functions, and may communicate with one or more core network (core network, CN) devices via an access network device (which may alternatively be referred to as an access device) in a radio access network (radio access network, RAN) 140. The terminal device 110 may also be referred to as an access terminal, a terminal, a subscriber unit, a subscriber station, a mobile station, a remote station, a remote terminal, a mobile device, a user terminal, a user agent, a user apparatus, or the like. The terminal device 110 may be deployed on land, including an indoor, outdoor, handheld, or vehicle-mounted device; may be deployed on the water (for example, a ship); or may be deployed in the air (for example, on aircraft, a balloon, or a satellite). The terminal device 110 may be a cellular phone (cellular phone), a cordless telephone set, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), or the like. Alternatively, the terminal device 110 may be a handheld device having a wireless communication function, a computing device, another device connected to a wireless modem, a vehicle-mounted device, a wearable device, an uncrewed aerial vehicle device, a terminal in an internet of things or an internet of vehicles, a terminal in any form in a 5G network or a future network, relay user equipment, a terminal in a future evolved 6G network, or the like. The relay user equipment may be, for example, a 5G residential gateway (residential gateway, RG). For example, the terminal device 110 may be a virtual reality (virtual reality, VR) terminal, an augmented reality (augmented reality, AR) terminal, a wireless terminal in industrial control (industrial control), a wireless terminal in autonomous driving (autonomous driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal device herein is a 3GPP terminal. A type, a category, or the like of the terminal device is not limited in embodiments of this application. For ease of description, in this application, an example in which UE represents a terminal device is used for description below.

The operator network PLMN part may include but is not limited to a (radio) access network ((radio) access network, (R)AN) 120 and a core network (core network, CN) part.

The (R)AN 120 may be considered as a sub-network of an operator network, and is an implementation system between a service node in the operator network and the terminal device 110. To access the operator network, the terminal device 110 first passes through the (R)AN 120, and then may be connected to the service node in the operator network through the (R)AN 120. An access network device (RAN device) in embodiments of this application is a device that provides a wireless communication function for the terminal device 110, and may also be referred to as a network device. The RAN device includes but is not limited to a next generation NodeB (next generation node base station, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission reception point (transmitting and receiving point, TRP), a transmission point (transmitting point, TP), a pico (pico), a mobile switching center, a network device in a future network, or the like. In systems using different radio access technologies, devices with functions of the access network device may have different names. For ease of description, in all embodiments of this application, the foregoing apparatuses that provide a wireless communication function for the terminal device 110 are collectively referred to as an access network device, or referred to as a RAN or an AN for short. It should be understood that a specific type of the access network device is not limited in this specification.

The CN part may include but is not limited to the following network functions (Network Functions, NFs): a user plane function (user plane function, UPF) 130, a network exposure function (network exposure function, NEF) 131, a network function repository function (network function repository function, NRF) 132, a policy control function (policy control function, PCF) 133, a unified data management (unified data management, UDM) function 134, a unified data repository (unified data repository, UDR) function 135, a network data analytics function (network data analytics function, NWDAF) 136, an authentication server function (Authentication Server Function, AUSF) 137, an access and mobility management function (access and mobility management function, AMF) 138, and a session management function (session management function, SMF) 139.

The data network DN 140 may also be referred to as a packet data network (packet data network, PDN), and is usually a network located outside the operator network, for example, a third-party network. Certainly, in some implementations, the DN may be alternatively deployed by an operator, that is, the DN belongs to a part of the PLMN. Whether the DN belongs to the PLMN is not limited in this application. The operator network PLMN may access a plurality of data networks DNs 140. The data network DN 140 may be deployed with a plurality of services, and may provide a data service, a voice service, and/or the like for the terminal device 110. For example, the data network DN 140 may be a private network of a smart factory, a sensor installed in a workshop of the smart factory may be the terminal device 110, a control server of the sensor is deployed in the data network DN 140, and the control server may provide a service for the sensor. The sensor may communicate with the control server, to obtain instructions of the control server, transmit collected sensor data to the control server based on the instructions, and the like. For another example, the data network DN 140 may be an intemal office network of a company, a mobile phone or a computer of an employee of the company may be the terminal device 110, and the mobile phone or the computer of the employee may access information, data resources, and the like in the internal office network of the company. The terminal device 110 may establish a connection to the operator network through an interface (for example, N1) provided by the operator network, and use the data service, the voice service, and/or the like provided by the operator network. The terminal device 110 may further access the data network DN 140 through the operator network, and use an operator service deployed in the data network DN 140 and/or a service provided by a third party.

The following further briefly describes NF functions included in the CN.
1. The UPF 130 is a gateway provided by an operator, and is a gateway for communication between the operator network and the data network DN 140. The UPF network function 130 includes user plane-related functions such as data packet routing and transmission, data packet detection, traffic usage reporting, quality of service (quality of service, QoS) handling, lawful listening, uplink data packet detection, and downlink data packet storage.
2. The NEF 131 is a control plane function provided by an operator, mainly enables a third party to use a service provided by a network, and supports the network in exposing a capability of the network, event and data analysis, providing security configuration information for a PLMN from an external application, conversion of information exchanged inside and outside the PLMN, and the like.
3. The NRF 132 is a control plane function provided by an operator, and may be configured to maintain real-time information of a network function and a service in a network. For example, the NRF supports network service discovery, maintains services supported by NF configuration data (an NF profile) of NF instances, supports service discovery of a service communication proxy (service communication proxy, SCP), maintains SCP configuration data (an SCP profile) of SCP instances, sends notifications about newly registered, deregistered, and updated NFs and SCPs, maintains health statuses of NFs and SCPs, and the like.
4. The PCF 133 is a control plane function provided by an operator, and supports a unified policy framework to govern network behavior and provide subscription information related to a policy rule and policy decision for another control function.
5. The UDM 134 is a control plane function provided by an operator, and is responsible for storage of a subscription permanent identifier (subscription permanent identifier, SUPI) of a subscriber of an operator network, a generic public subscription identifier (generic public subscription identifier, GPSI) of the subscriber, a credential (credential), and other information. The SUPI is first encrypted during transmission, and an encrypted SUPI is referred to as a subscription concealed identifier (subscription concealed identifier, SUCI). The information stored in the UDM network function 134 may be used for authentication and authorization when the terminal device 110 accesses the operator network. The subscriber of the operator network may be specifically a user using a service provided by the operator network, for example, a user using a subscriber identity module (subscriber identity module, SIM) card of China Telecom, or a user using a SIM card of China Mobile. The credential of the subscriber may be a long-term key stored in the SIM card, or a stored small file, for example, information related to encryption of the SIM card, and is used for authentication and/or authorization. It should be noted that for ease of description, information such as the permanent identifier, the credential, a security context, authentication data (cookie), and a token related to verification/authentication and authorization is not distinguished or limited in embodiments of this application.
6. The UDR 135 is a control plane function provided by an operator, and provides a function of storing and obtaining subscription data for a UDM, provides a function of storing and obtaining policy data for a PCF, stores and obtains NF group ID (group ID) information of a user, and the like.
7. The NWDAF 136 is a control plane function provided by an operator. A main function of the NWDAF 136 is to collect data from an NF, an external application function (application function, AF), an operations, administration and maintenance (operations, administration and maintenance, OAM) system, and the like, and provide the NF and the AF with NWDAF service registration, data exposure, data analysis, and the like.
8. The AUSF 137 is a control plane function provided by an operator, and is usually used for primary authentication, namely, authentication between the terminal device 110 (subscriber) and an operator network. After receiving an authentication request initiated by the subscriber, the AUSF network function 137 may perform authentication and/or authorization on the subscriber by using authentication information and/or authorization information stored in the UDM network function 134, or generate authentication information and/or authorization information of the subscriber by using the UDM network function 134. The AUSF network function 137 may feed back the authentication information and/or the authorization information to the subscriber.
9. The AMF 138 is a control plane network function provided by an operator network, and is responsible for access control and mobility management when the terminal device 110 accesses the operator network, for example, including functions such as mobility status management, allocation of a temporary user identity, and user authentication and authorization.
10. The SMF 139 is a control plane network function provided by an operator network, and is responsible for managing a PDU session of the terminal device 110. The PDU session is a channel for transmitting a PDU, and the terminal device and the data network DN 140 need to transmit PDUs to each other through the PDU session. The SMF network function 139 is responsible for establishment, maintenance, deletion, and the like of the PDU session. The SMF network function 139 includes session-related functions such as session management (for example, session establishment, modification, and release, including tunnel maintenance between the user plane function UPF 130 and the (R)AN 120), selection and control of the UPF network function 130, service and session continuity (service and session continuity, SSC) mode selection, and roaming. In an edge-computing 5G system architecture, an enhanced 5GS is being defined to support access of UE to an EHE in a VPLMN. For example, the UE accesses the EHE (which may be referred to as V-EHE for short) in the VPLMN by using an established local breakout PDU (local breakout PDU, LBO PDU) session, or the UE accesses the V-EHE by using an established home routed PDU (home routed PDU, HR PDU) session. The HR PDU session is a home routed PDU session, and this type of PDU session is supported by an SMF controlled by a home network (home PLMN, HPLMN), an SMF controlled by the VPLMN, at least one UPF controlled by the HPLMN, and at least one UPF controlled by the VPLMN. In this case, the SMF in the HPLMN selects the UPF in the HPLMN, and the SMF in the VPLMN selects the UPF in the VPLMN.

For example, for the UE accessing the V-EHE by using the established HR PDU session, a roaming architecture shown in (b) in FIG. 1 is defined. The network architecture may specifically include two parts: a VPLMN and an HPLMN. For functions of related network elements, refer to related descriptions in (a) in FIG. 1. For brevity, details are not described herein again. In the network architecture, the UE may establish an HR PDU session, and insert an uplink classifier/branching point (uplink classifier/branching point, UL CL/BP) into the VPLMN, to support the UE in accessing an EHE (for example, an edge application server (edge application server, EAS) in (b) in FIG. 1) in the VPLMN. This type of HR PDU session may be referred to as a home routed session breakout PDU (HR session breakout PDU, HR-SBO PDU) session. Optionally, the HR-SBO PDU session in the VPLMN may include only a UPF of the UL CL/BP and a UPF of an L-PSA. Optionally, the UPF of the UL CL/BP and the UPF of the L-PSA may be co-deployed. In other words, a UPF serves as both a UPF of a UL CL and a UPF of an L-PSA.

The following briefly describes functions of some network elements in (b) in FIG. 1.
1. An edge application server discovery function EASDF is a network element (DNS server) deployed in an operator network, and is configured to perform DNS message handling based on an indication of an SMF, specifically including one or more of the following: receiving a DNS message handling rule, exchanging a DNS message with UE, sending the DNS message to a central DNS or a local DNS, buffering or discarding a DNS message from the UE or the DNS server, and the like. If DNS security is used, the EASDF may also be configured to terminate the DNS security. One or more EASDF instances may be deployed in one PLMN. The EASDF and a PSA UPF have a direct user plane connection over N6 to transmit DNS signaling exchanged with the UE.
2. An EHE may be deployed in a DN. The EHE may be controlled by an operator or a third party. One or more EASs may be deployed in the EHE.

It may be understood that the foregoing network elements or functions may be physical entities in a hardware device, software instances running on dedicated hardware, or virtualized functions instantiated on a sharing platform (for example, a cloud platform). In short, an NF may be implemented by hardware or software.

In FIG. 1, Nnef, Nnrf, Npcf, Nudm, Nudr, Nnwdaf, Nausf, Namf, Nsmf, Neasdf, N1, N2, N3, N4, N6, and N9 are interface sequence numbers. For example, for meanings of the interface serial numbers, refer to meanings defined in the 3GPP standard protocol. The meanings of the interface serial numbers are not limited in this application. It should be noted that interface names between the network functions in FIG. 1 are merely examples. During specific implementation, the interface names of the system architecture may be alternatively other names. This is not limited in this application. In addition, names of messages (or signaling) transmitted between the foregoing network elements are merely examples, and do not constitute any limitation on functions of the messages.

It should be further understood that the AMF, the SMF, the UPF, the NEF, the AUSF, the NRF, the PCF, and the UDM shown in FIG. 1 may be understood as network elements configured to implement different functions in the core network, for example, may be combined as required to form a network slice. These core network elements may be independent devices, or may be integrated into a same device to implement different functions. Specific forms of the foregoing network elements are not limited in this application.

It should be further understood that the names are defined merely for ease of distinguishing between different functions, and should not constitute any limitation on this application. This application does not exclude a possibility that another name is used in the 5G network and another future network. For example, in the 6G network, a part or all of the foregoing network elements may still use terms in 5G, or may use other names.

The following briefly describes an HR-SBO PDU session establishment process. For specific descriptions, refer to 3GPP TS23.548.

In a possible implementation, in the HR-SBO PDU session establishment process, a V-SMF determines and selects a V-EASDF, and establishes a DNS context with the V-EASDF. Specifically, the following implementation process is included.

In a registration procedure defined in 3GPP TS23.502, UE requests to register with a network, and an AMF receives an HR-SBO allowed indication corresponding to each data network name (data network name, DNN) or each piece of single network slice selection assistance information (single network slice selection assistance information, S-NSSAI) from a UDM by using an Nudm_UDM_Get service.

In a PDU session establishment procedure defined in 3GPP TS23.502, if an AMF receives an HR-SBO allowed indication for a requested DNN/S-NSSAI during a UE registration request process, the AMF may select, for the UE, a V-SMF that supports HR-SBO. Further, the V-SMF sends, to an H-SMF, a request for establishing a PDU session that supports HR-SBO in a VPLMN and a V-EASDF address.

Then, the H-SMF authorizes the request of the V-SMF based on session management subscription data, and provides the V-SMF with an optional VPLMN-specific offloading policy (if an SLA between an HPLMN and the VPLMN exists in the HPLMN) and an HPLMN DNS server address. The H-SMF sets a DNS server address field to the V-EASDF address, includes the V-EASDF address in a PCO, and sends the PCO to the V-SMF.

Finally, the V-SMF configures a DNS processing rule for the V-EASDF based on the VPLMN-specific offloading policy and the HPLMN DNS server address that are received from the H-SMF.

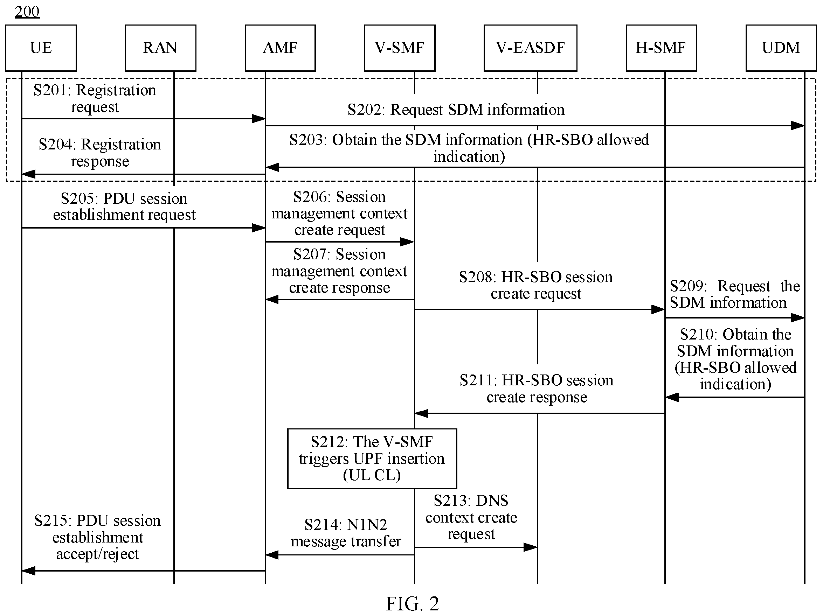

FIG. 2 is a diagram of an HR-SBO PDU session establishment procedure 200 according to an embodiment of this application. As shown in FIG. 2, the method includes the following several steps. For a part that is not described in detail, refer to an existing protocol.

S201: UE sends a registration request to an AMF. Correspondingly, the AMF receives the registration request from the UE.

For example, the UE sends a Registration Request message to the AMF, to request to register with a network.

S202: The AMF requests subscriber data management (subscriber data management, SDM) information (Get SDM information) from a UDM. Correspondingly, the UDM receives the request for the SDM information from the AMF.

S203: The UDM sends the SDM information (SDM information) to the AMF. Correspondingly, the AMF receives the SDM information from the UDM.

The SDM information carries an HR-SBO allowed indication (HR-SBO allowed indication) per data network name (data network name, DNN)/single network slice selection assistance information (single network slice selection assistance information, S-NSSAI). In other words, the UE is allowed to access a data network in a VPLMN or a local data network by using a home routed PDU session that corresponds to the DNN/S-NSSAI.

For example, the AMF may receive the HR-SBO allowed indication per DNN/S-NSSAI from the UDM by using an Nudm_UDM_Get service.

S204: The AMF sends a registration response to the UE. Correspondingly, the UE receives the registration response from the AMF.

In response to the registration request in step S201, the AMF sends a Registration Response message to the UE.

That is, steps S201 to S204 are a process in which the UE registers with the network. For a specific implementation, refer to related descriptions in 3GPP TS23.502. For brevity, details are not described herein.

S205: The UE sends a PDU session establishment request to the AMF. Correspondingly, the AMF receives the PDU session establishment request from the UE.

For example, the UE sends a PDU session establishment request message and the DNN/S-NSSAI to the AMF. Further, the AMF determines, based on the DNN/S-NSSAI of the PDU session and the HR-SBO allowed indication per DNN/S-NSSAI obtained in the foregoing registration process, to select, for the PDU session, a V-SMF that supports HR-SBO. In other words, when determining that the PDU session requested by the UE allows HR-SBO, the AMF selects the V-SMF that supports HR-SBO.

S206: The AMF sends a session management context create request to the V-SMF. Correspondingly, the V-SMF receives the session management context create request from the AMF.

S207: The V-SMF sends a session management context create response to the AMF. Correspondingly, the AMF receives the session management context create response from the V-SMF.

For example, the AMF sends a CreatSMContext Request message to the V-SMF. The message may carry an N1 SM container, and the N1 SM container includes PDU session establishment. Optionally, the message may further carry the HR-SBO allowed indication. Correspondingly, the AMF receives a CreatSMContext Response message from the V-SMF.

S208: The V-SMF sends an HR-SBO session create request to an H-SMF. Correspondingly, the H-SMF receives the HR-SBO session create request from the V-SMF.

The HR-SBO session create request carries an HR-SBO request, a V-EASDF address, or a VPLMN DNS server address (which may be referred to as a V-DNS server address for short), for example, an IP address (which may be, for example, an IPv4 address, an IPv6 prefix, or an IPv6 address).

For example, when the V-SMF determines to create an HR VSBO session, the V-SMF sends, to the H-SMF, a PDU session Creat Request message including a VSBO request, a V-EASDF address, or a V-DNS server address.

S209: The H-SMF requests SDM information from the UDM. Correspondingly, the UDM receives a request for the SDM information from the H-SMF.

S210: The UDM sends the SDM information to the H-SMF. Correspondingly, the H-SMF receives the SDM information from the UDM.

The SDM information includes HR-SBO allowed (HR-SBO allowed), which may be, for example, an HR-SBO authorization indication and/or HR-SBO authorization information.

Optionally, the HR-SBO allowed indication may alternatively be (pre)configured in the H-SMF, and the procedure of obtaining the HR-SBO allowed from the UDM in steps S209 and S210 may not be performed.

S211: The H-SMF sends an HR-SBO session create response to the V-SMF. Correspondingly, the V-SMF receives the HR-SBO session create response from the H-SMF.

The HR-SBO session create response includes an HR-SBO authorization indication, a protocol configuration option (protocol configuration option, PCO), and a home DNS server address.

For example, when the H-SMF determines that establishment of the HR-SBO PDU session is allowed, the H-SMF sets a DNS server address in the PCO to the V-EASDF address, and sends, to the V-SMF, a PDU session Creat Response message that includes the HR-SBO allowed indication, the PCO, and the home DNS server address.

S212: The V-SMF triggers local UPF insertion as a UL CL/BP.

S213: The V-SMF sends a DNS context create request to a V-EASDF. Correspondingly, the V-EASDF receives the DNS context create request from the V-SMF.

For example, the DNS context create request may be an Neasdf_DNSContextCreat Request message. For example, the request includes a DNS message handling rule (DNS Message Handling Rule), a UE IP address, and a DNN.

S214: The V-SMF sends N1N2 message transfer to the AMF. Correspondingly, the AMF receives the N1N2 message transfer from the V-SMF.

The N1N2 message transfer may be N1N2 _MessageTransfer, and the message includes PDU session establishment accept or reject information (PDU session Establishment Accept/Reject).

S215: The AMF sends PDU session establishment accept or reject to the UE. Correspondingly, the UE receives the PDU session establishment accept or reject from the AMF.

That is, steps S205 to S215 are a process in which the UE requests to establish the PDU session. For a specific implementation, refer to related descriptions in 3GPP TS23.502. For brevity, details are not described herein.

Further, based on the foregoing HR-SBO PDU session establishment procedure, the UE may subsequently exchange a DNS message with the V-EASDF, to discover an application server address. To ensure network communication security, security protection of DNS messages needs to be considered.

For example, a security measure for protecting a DNS message is defined according to 3GPP TS33.501, and may be adopted when user plane integrity protection cannot be used. A specific security method includes that UE and a DNS server support DNS over (D)TLS. A DNS server in a 3GPP network can imperatively use a DNS over (D)TLS protection mechanism. The UE may preconfigure security information of the DNS server or receive security information of the DNS server from a core network so that a TLS cipher suite supporting integrity protection needs to be negotiated when DNS over (D)TLS is used. Based on related descriptions in 3GPP TS24.501, the security information of the DNS server may be provided by using the core network. For example, the UE may include an extended protocol configuration option (extended protocol configuration options, ePCO) information element (information element, IE) and a security information indicator of the DNS server in the PDU session establishment request message (for example, step S205 in the method 200). Optionally, the PDU session establishment request message may further carry DNS server security protocol support, to indicate a security protocol type that the UE expects to support. Correspondingly, the network may include an ePCO IE in a PDU session establishment accept message sent to the UE, where the ePCO IE includes security information that is of the DNS server and whose length is two octets. Optionally, the PDU session establishment accept message may further carry the DNS server security protocol support, indicating that the network expects the UE to imperatively use DNS over (D)TLS. Upon receiving the security information of the DNS server, the UE shall transfer the security information to an upper layer, and the UE may use the security information of the DNS server to send the DNS message through (D)TLS.

It should be understood that the foregoing solution for protecting the DNS message is mainly applicable to a non-roaming PDU session scenario or an LBO session scenario. In other words, the SMF selects an EASDF as the DNS server based on information such as a DNS over (D)TLS capability supported by the UE and optionally a security protocol type supported by the UE that are carried in the ePCO, and provides security information of the EASDF for the UE. However, in a roaming scenario, when a PDU session, for example, an HR PDU session, has two serving SMFs, a V-SMF and an H-SMF manage the HR PDU session, and how to determine to provide security information of a DNS server for the UE is not defined.

Specifically, for an HR-SBO PDU session scenario in an enhanced edge computing architecture, a V-SMF may determine that a V-EASDF serves as a DNS server. Because an ePCO is transparently transmitted by the V-SMF to an H-SMF in a PDU session establishment process, and the V-SMF does not parse content of the ePCO, the V-SMF cannot sense whether UE supports DNS over (D)TLS and which security protocol type is supported by the UE. As a result, whether DNS over (D)TLS is used cannot be determined. In comparison, the H-SMF can learn whether the UE supports DNS over (D)TLS and which security protocol type is supported by the UE, but the H-SMF does not sense information about the V-EASDF. When user plane security (for example, integrity protection) of an established HR PDU session is not enabled, a network cannot provide security protection for a DNS message exchanged between the UE and the V-EASDF.

In other words, in the roaming architecture, in a scenario in which the UE is supported in accessing a V-EHE through the HR PDU session, if the V-SMF determines to process the DNS message through the V-EASDF, how to ensure security of the DNS message between the UE and the V-EASDF is an urgent technical problem to be resolved.

In view of this, this application provides a communication method and apparatus. For a session establishment or modification process in which a terminal device is supported in accessing an edge environment in a visited network, a visited session management function network element exchanges security information with a home session management function network element, and then the home session management function network element sends the security information to the terminal device, so that the terminal device can establish a secure connection to a DNS server based on the security information, thereby ensuring network communication security.

For ease of understanding of embodiments of this application, the following descriptions are provided.

First, in this application, unless otherwise specified or a logic conflict occurs, terms and/or descriptions in different embodiments are consistent and may be mutually referenced, and technical features in different embodiments may be combined based on an internal logical relationship thereof, to form a new embodiment.

Second, in this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" usually indicates an "or" relationship between associated objects. At least one of the following items (pieces) or a similar expression thereof means any combination of these items, including any combination of singular items (pieces) or plural items (pieces). For example, at least one of a, b, and c may indicate a, b, c, a and b, a and c, b and c, or a, b, and c. Each of a, b, and c may be in a singular form or a plural form.

Third, in this application, "first", "second", and various numbers (for example, #1 and #2) indicate differentiation for ease of description, but are not intended to limit the scope of embodiments of this application, for example, are intended to distinguish between different messages but not to describe a specific order or sequence. It should be understood that objects described in this way are interchangeable in an appropriate circumstance, so that a solution other than embodiments of this application can be described.

Fourth, in this application, the descriptions "when...", "in a case that...", "if", and the like all mean that a device performs corresponding processing in an objective case, but are not intended to limit time. The descriptions do not necessarily mean that the device performs a determining action during implementation, and do not mean any other limitation.

Fifth, in this application, the terms "include", "have", and any variants thereof are intended to cover a non-exclusive inclusion. For example, a process, method, system, product, or device that includes a series of steps or units is not necessarily limited to those steps or units that are clearly listed, but may include other steps or units that are not clearly listed or are inherent to the process, method, product, or device.

Sixth, in this application, "indicate" may include a direct indication and an indirect indication. When a piece of indication information indicates A, the indication information may directly indicate A or indirectly indicate A, but it does not indicate that the indication information definitely carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. **In** addition, sending periodicities and/or sending occasions of the sub-information may be the same or may be different. A specific sending method is not limited in this application.

The "indication information" in embodiments of this application may be an explicit indication, to be specific, a direct indication through signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

Seventh, in this application, a "protocol" may be a standard protocol in the communication field, for example, may include a 5G protocol, an NR protocol, and a related protocol used in a future communication system. This is not limited in this application. "Predefined" may include being defined in advance, for example, being defined in a protocol. "Preconfigured" may be implemented by prestoring corresponding code or a corresponding table in a device, or may be implemented in another manner that may indicate related information. A specific implementation thereof is not limited in this application.

Eighth, in this application, "store" may refer to being stored in one or more memories. The one or more memories may be separately disposed, or may be integrated in an encoder, a decoder, a processor, or a terminal device. Alternatively, a part of the one or more memories may be separately disposed, and a part of the one or more memories are integrated into a decoder, a processor, or a terminal device. A type of the memory may be a storage medium in any form. This is not limited in this application.

Ninth, in this application, "communication" may also be described as "data transmission", "information transmission", "data processing", or the like. "Transmission" includes "sending" and "receiving".

The following describes in detail the communication method provided in embodiments of this application with reference to the accompanying drawings. For example, the communication method may be applied to the communication system shown in FIG. 1. For ease of description, in embodiments of this application, an SMF in an HPLMN is denoted as an H-SMF, and an SMF in a VPLMN is denoted as a V-SMF. Details are not described in the following related parts. The visited V-SMF obtains security information of a DNS server, and exchanges the information with the home H-SMF. Further, the H-SMF sends the security information of the DNS server to a terminal device, so that the terminal device and the DNS server subsequently perform secure communication. For specific implementations, refer to the following descriptions of a method 300 to a method 800.

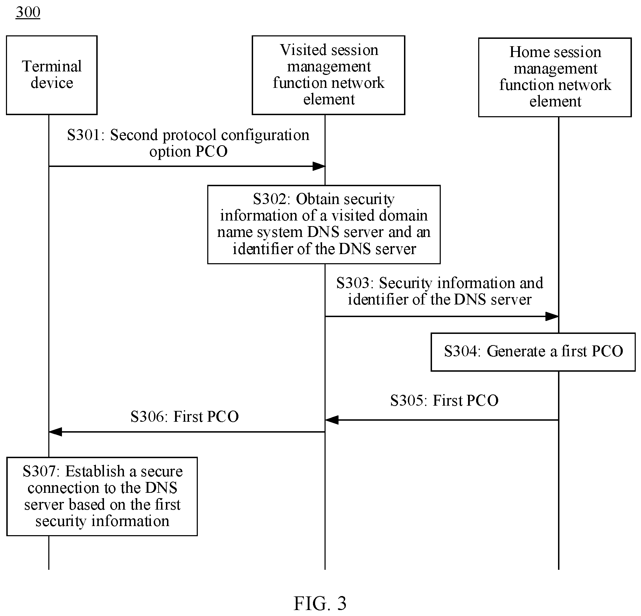

FIG. 3 is a schematic flowchart of a communication method 300 according to an embodiment of this application. As shown in FIG. 3, the method is applied to a process of establishing or modifying a session of a terminal device in a roaming scenario, and includes the following several steps. For a part that is not described in detail, refer to an existing protocol.

S301: The terminal device sends a second PCO to a visited session management function network element.

Correspondingly, the visited session management function network element receives the second PCO from the terminal device.

The second PCO includes indication information indicating that the terminal device supports security protocol-based security protection on a DNS message.

In this embodiment of this application, when the terminal device supports security protocol-based security protection on a DNS message, the terminal device includes, in the second PCO, the indication information indicating that the terminal device supports security protocol-based security protection on a DNS message.

Optionally, the second PCO further includes one or more security protocol types supported by the terminal device, or indicates a security protocol type supported by the terminal device, for example, a datagram transport layer security (datagram transport layer security, DTLS) protocol and/or a transport layer security (transport layer security, TLS) protocol, or another security protocol type. This is not limited in this application. Therefore, in this embodiment of this application, the security protocol type may also be understood as supported security capability information.

For example, the terminal device (for example, UE) sends the second PCO to a mobility management function network element (for example, an AMF) by using a PDU session Establishment Request message, and the AMF sends the second PCO to the visited session management function network element (for example, a V-SMF) by using an Nsmf_PDUSession_CreatSMContext Request message.

For ease of description, in this embodiment of this application, a PCO from a home session management function network element is a first PCO, and a PCO from the terminal device is the second PCO. Details are not described in the following related parts. Optionally, the first PCO or the second PCO may be an extended protocol configuration option (extended protocol configuration option, ePCO). This is not limited in this application.

It should be understood that the method may be performed by the terminal device (for example, the UE shown in FIG. 1), or may be performed by a chip or a circuit in the terminal device. The visited session management function network element may be the V-SMF in the 5G scenario shown in FIG. 1, and certainly is not limited to the 5G scenario, or may be a network element having a similar function in a subsequent evolved system. For ease of expression, the V-SMF is used as an example in subsequent embodiments of this application.

S302: The visited session management function network element obtains security information of a visited DNS server and an identifier of the DNS server.

The security information includes a credential for authenticating the DNS server, for example, a root key of the DNS server. The identifier of the DNS server may be an identifier indicating a DNS address, for example, an IP address. The IP address may be an IPv4 address, an IPv6 prefix, or an IPv6 address.

In an example, the security information further includes one or more security protocol types supported by the DNS server and/or a port number for establishing a secure connection.

In another example, the visited session management function network element further obtains one or more security protocol types supported by the DNS server and/or a port number for establishing a secure connection. In other words, the visited session management function network element obtains the security information of the visited DNS server, the one or more security protocol types supported by the DNS server and/or the port number for establishing the secure connection, and the identifier of the DNS server.

Based on the foregoing two examples, the one or more security protocol types supported by the DNS server and/or the port number for establishing the secure connection and the security information may have an inclusion relationship or a parallel relationship. This is not specifically limited in this application.

For example, the DNS server in this embodiment of this application may be a V-EASDF. It should be understood that the V-EASDF may be understood as an enhanced DNS server, and the V-EASDF can support all functions of the DNS server, and is additionally enhanced. Therefore, for a subsequent specific implementation in which the UE performs a server discovery procedure by interacting with the V-EASDF based on the security information, refer to a current implementation of interaction between the UE and the DNS server. For brevity, details are not described herein again.

It may be understood that the security information is for establishing a secure connection between the terminal device and the DNS server. To be specific, when the terminal device determines to initiate a DNS discovery procedure, the terminal device may establish a (D)TLS connection to the DNS server based on the received security information, and send the DNS message through the (D)TLS connection. It should be understood that the DNS message is protected, so that secure communication between the UE and the DNS server can be ensured.

Optionally, the security information may be obtained by the visited session management function network element from a network function repository function network element.

For example, the visited session management function network element sends a DNS server discovery message to the network function repository function network element, and the visited session management function network element receives a response message from the network function repository function network element, where the response message includes the security information.

Optionally, the security information may alternatively be obtained by the visited session management function network element from a local configuration.

The following specifically describes an implementation of obtaining the security information and the identifier of the DNS server.

In a possible implementation, before the visited session management function network element obtains the security information of the visited DNS server, the visited session management function network element receives the second PCO from the terminal device, where the second PCO includes the indication information indicating that the terminal device supports security protocol-based security protection on a DNS message; the visited session management function network element sends the second PCO to the home session management function network element; and the visited session management function network element receives a request message from the home session management function network element, where the request message includes the indication information indicating that the terminal device supports security protocol-based security protection on a DNS message. Further, the visited session management function network element obtains the security information in response to the indication information.

It should be noted that indication information received by the home session management function network element from the terminal device may be different from the indication information sent by the home session management function network element to the visited session management function network element. For example, after receiving indication information #1 from the terminal device, the home session management function network element parses the indication information #1, generates indication information #2, and then sends the indication information #2 to the visited session management function network element. Both the indication information #1 and the indication information #2 indicate that the terminal device supports security protocol (for example, DTLS and/or TLS)-based security protection on a DNS message.

In this embodiment of this application, the indication information included in the second PCO and indicating that the terminal device supports security protocol-based security protection on a DNS message is capability information of a security protocol that can be supported by the terminal device, and may also be understood as a DNS server security information indicator (DNS server security information indicator) expected by the terminal device.

Optionally, the request message itself, for example, Nsmf_Info Request, from the home session management function network element may be a message for requesting the security information from the visited session management function network element. In this case, the request message may not carry the indication information.

For example, the visited session management function network element determines, based on the received request message or the indication information carried in the request message, to use DNS over (D)TLS, and may further determine to obtain the security information. For example, the visited session management function network element obtains an instance identifier of the DNS server, the security information, and a DNS server address locally or from an NRF. For another example, the visited session management function network element first obtains an instance identifier of the DNS server locally or from an NRF, then obtains a DNS server address from an address resolver based on the instance identifier of the DNS server, and obtains the security information locally or from the DNS server or another storage network element based on the instance identifier of the DNS server. For another example, the visited session management function network element first obtains an instance identifier of the DNS server and the security information locally or from an NRF, and then obtains a DNS server address from an address resolver based on the instance identifier of the DNS server.

Optionally, the request message may further include one or more of the following: a user plane security policy of a PDU session, an ID of an HPLMN, and DNS server security protocol support (DNS server security protocol support).

In an example, if the request message includes the user plane security policy of the PDU session, the visited session management function network element may determine, based on the user plane security policy of the PDU session, whether to provide the security information of the DNS server. For example, when the user plane security policy of the PDU session indicates that user plane integrity protection is not required, if the visited session management function network element may determine to use DNS over (D)TLS, the visited session management function network element may provide the security information. Alternatively, when the user plane security policy of the PDU session indicates that user plane integrity protection is required, the visited session management function network element may not provide the security information.

In another example, if the request message includes the ID of the HPLMN, the visited session management function network element may determine, based on the ID of the HPLMN, to provide the security information of the DNS server. The security information is for secure message exchange between a subscriber in a PLMN corresponding to the ID of the HPLMN and the DNS server.

In still another example, if the request message includes the DNS server security protocol support, the visited session management function network element may determine, based on the DNS server security protocol support, to use DNS over (D)TLS, and provide the security information. It should be noted that the examples provided above may be implemented independently, or may be implemented in combination. For example, the visited session management function network element may determine, based on a local policy and the user plane security policy of the PDU session, whether to provide the security information of the DNS server. For example, the local policy indicates that when the terminal device supports DNS over (D)TLS and the terminal device belongs to the HPLMN, the visited session management function network element may provide the security information for secure interaction between the terminal device in the PLMN and the DNS server.

In another possible implementation, before the visited session management function network element obtains the security information of the visited DNS server and the identifier of the DNS server, the visited session management function network element receives a home routed session breakout HR-SBO allowed indication from a mobility and access management function network element. Further, the visited session management function network element obtains the security information and the identifier of the DNS server based on the HR-SBO allowed indication.

For example, the visited session management function network element obtains an instance identifier of the DNS server, the security information, and a DNS server address locally or from an NRF. Alternatively, the visited session management function network element first obtains an instance identifier of the DNS server locally or from an NRF, then obtains a DNS server address from an address resolver based on the instance identifier of the DNS server, and obtains the security information locally or from the DNS server or another storage network element based on the instance identifier of the DNS server. Alternatively, the visited session management function network element first obtains an instance identifier of the DNS server and the security information locally or from an NRF, and then obtains a DNS server address from an address resolver based on the instance identifier of the DNS server.

In still another possible implementation, the visited session management function network element may obtain the security information based on a local policy.

Optionally, the local policy indicates to obtain the security information when the terminal device supports DNS over (D)TLS. For example, if the second PCO received by the visited session management function network element includes DNS over (D)TLS, the visited session management function network element determines to obtain the security information.

Optionally, the local policy may include information about HR-SBO supported or allowed by each DNN/S-NSSAI. In this case, the visited session management function network element may determine, from the information about HR-SBO supported or allowed by each DNN/S-NSSAI in the local policy, whether the DNN/S-NSSAI requested by the terminal device supports or allows HR-SBO, to select the DNS server, and obtain the security information of the DNS server and the DNS server address. For example, the visited session management function network element obtains an instance identifier of the DNS server, the security information, and a DNS server address locally or from an NRF. For another example, the visited session management function network element first obtains an instance identifier of the DNS server locally or from an NRF, then obtains a DNS server address from an address resolver based on the instance identifier of the DNS server, and obtains the security information locally or from the DNS server or another storage network element based on the instance identifier of the DNS server. For another example, the visited session management function network element first obtains an instance identifier of the DNS server and the security information locally or from an NRF, and then obtains a DNS server address from an address resolver based on the instance identifier of the DNS server.

Optionally, the local policy may further include PLMN information, to indicate that an HR-SBO service may be provided for users of which PLMN. In this case, the visited session management function network element may determine whether the terminal device belongs to the PLMN, for example, whether an HPLMN of the terminal device is the PLMN, or whether the terminal device is a subscriber of the PLMN. If the HPLMN of the terminal device is not the PLMN, or the terminal device does not belong to the PLMN, the visited session management function network element may skip discovery of the DNS server. If the HPLMN of the terminal device is the PLMN, or the terminal device belongs to the PLMN, the visited session management function network element may select a DNS server that supports HR-SBO, for example, the V-EASDF.

Optionally, the local policies provided above may be implemented independently, or may be implemented in combination. For example, the visited session management function network element may determine whether the terminal device belongs to the PLMN, and determine whether the DNN/S-NSSAI requested by the terminal device supports or allows HR-SBO. Further, the visited session management function network element performs step S302 only when determining that the terminal device belongs to the PLMN and the DNN/S-NSSAI requested by the terminal device supports or allows HR-SBO.

In still another possible implementation, before the visited session management function network element obtains the security information of the visited DNS server, the visited session management function network element receives a home network identity from the home session management function network element. Further, the visited session management function network element obtains the security information based on the network identity of the terminal device.

For example, the visited session management function network element may determine the security information of the DNS server based on an identifier of an HPLMN of the terminal device. The security information is for secure message exchange between a subscriber in a PLMN corresponding to the ID of the HPLMN and the DNS server. Therefore, in this implementation, different security information of the DNS server may be determined for different HPLMNs. In other words, for the terminal device in different HPLMNs, security information, for example, credentials, for authenticating the DNS server is different.

In still another possible implementation, before the visited session management function network element obtains the security information of the visited DNS server, the visited session management function network element receives, from the home session management function network element, a user plane security policy corresponding to the session. Further, the visited session management function network element obtains the security information based on the user plane security policy. The user plane security policy indicates to disable or optionally enable user plane security protection. In this embodiment of this application, the user plane security policy may also be understood as a user plane integrity protection policy, and the user plane security policy and the user plane integrity protection policy may be used interchangeably.

For example, after receiving the user plane security policy from the home session management function network element, and determining that user plane security corresponding to the session is disabled or optionally enabled, the visited session management function network element determines that the secure connection needs to be established between the UE and the DNS server, to ensure secure communication between the UE and the DNS server. Therefore, the visited session management function network element needs to obtain the security information of the DNS server, and send the security information to the terminal device via the home session management function network element, so that the terminal device subsequently uses the security information to establish the secure connection between the terminal device and the DNS server.

Optionally, when the user plane security policy indicates to enable user plane security, the visited session management function network element may also obtain the security information. This is not specifically limited in this application.

For example, when the user plane security policy of the PDU session indicates that user plane integrity protection is not required, if the visited session management function network element may determine to use DNS over (D)TLS, the visited session management function network element may provide the security information. Alternatively, when the user plane security policy of the PDU session indicates that user plane integrity protection is required, the visited session management function network element may not provide the security information.

In still another possible implementation, before the visited session management function network element obtains the security information of the visited DNS server, the visited session management function network element receives HR-SBO authorization information from the home session management function network element. Further, the visited session management function network element obtains the security information and the identifier of the DNS server based on the HR-SBO authorization information.

Optionally, the HR-SBO authorization information may be information or indication information indicating the terminal device to access the visited DNS server by using a session, for example, an HR-SBO authorization indication or HR-SBO authorization information. This is not limited in this application. If the HR-SBO authorization information is indication information, direct indication or indirect indication may be used for determining whether HR-SBO is authorized.

For example, the visited session management function network element determines, based on the HR-SBO authorization information, that the security information of the DNS server and the identifier of the DNS server need to be provided when an HR-SBO PDU session request is received. Optionally, when determining that the terminal device meets an HR-SBO session establishment condition, the visited session management function network element obtains the security information and the identifier of the DNS server based on the HR-SBO authorization information. For example, the visited session management function network element may determine, based on location information of the terminal device, whether the terminal device moves to an area in which the terminal device can access an edge application in a V-PLMN. If it is determined that the terminal device currently moves to a service area of the edge application, it may be determined that the HR-SBO session establishment condition is met, and the security information and the identifier of the DNS server are obtained based on the locally stored HR-SBO authorization information.

S303: The visited session management function network element sends the security information and the identifier of the DNS server to the home session management function network element. Correspondingly, the home session management function network element receives the security information and the identifier of the DNS server from the visited session management function network element.

For example, the security information and the identifier of the DNS server are sent in an Nsmf_PDUSession_Creat Request message.

Optionally, the visited session management function network element may send the security information and the identifier of the DNS server separately to the home session management function network element. To be specific, the visited session management function network element may send the identifier of the DNS server to the home session management function network element in a first message, and send the security information to the home session management function network element in a second message. In other words, the security information and the identifier of the DNS server may not be sent in a same message, or may not be sent at the same time. Sending occasions and bearer manners of the security information and the identifier of the DNS server are not specifically limited in this embodiment of this application. Optionally, the visited session management function network element obtains policy information, where the policy information indicates a trigger condition for the home session management function network element to send the security information to the terminal device. Further, the visited session management function network element may further send the policy information to the home session management function network element.

For example, the trigger condition may be as follows: When determining that the terminal device supports DNS over (D)TLS, the home session management function network element may provide the security information for the terminal device; or when determining that the terminal device supports DNS over (D)TLS, and the user plane security policy of the PDU session indicates that integrity protection is not required or recommended, the home session management function network element may provide the security information for the terminal device.

S304: The home session management function network element generates a first PCO.

The first PCO includes the security information of the DNS server and the identifier of the DNS server.

Optionally, the first PCO may further include one or more of the following: one or more security protocol types in the one or more security protocol types supported by the DNS server and the port number for establishing the secure connection between the terminal device and the DNS server. It should be noted that the one or more security protocol types included in the first PCO may be the same as or different from the one or more security protocol types supported by the DNS server that are carried in the security information received in step S303. This is not limited in this application.

For example, a DNS server provided by the visited session management function network element may support a security protocol 1 and a security protocol 2. Correspondingly, the security information sent by the visited session management function network element includes the security protocol 1 and the security protocol 2, and security protocol types supported by the DNS server and included in the first PCO may be the security protocol 1 and/or the security protocol 2. For example, in case 1, if the security protocol types that are carried in the second PCO and that are supported by the terminal device are the security protocol 1 and the security protocol 2, the visited session management function network element determines that the first PCO includes the security protocol 1 and the security protocol 2. Alternatively, in case 2, if the security protocol type that is carried in the second PCO and that is supported by the terminal device is the security protocol 1, the visited session management function network element determines that the first PCO includes the security protocol 1. Optionally, for the foregoing case 2, the first PCO sent by the visited session management function network element to the terminal device may alternatively include both the security protocol 1 and the security protocol 2. Subsequently, when determining, based on the security protocol type such as the security protocol 1 (applicable to a TLS connection) supported by the terminal device, to initiate the DNS discovery procedure, the terminal device may establish a TLS connection to the DNS server based on the security information, and send the DNS message through the TLS connection.

The following specifically describes a specific implementation in which the home session management function network element generates the first PCO.

For example, the home session management function network element sends a subscriber data management request message to a unified data management function network element; and the home session management function network element receives a subscriber data management response message from the unified data management function network element, where the subscriber data management response message includes the home routed session breakout HR-SBO authorization information.

In a possible implementation, the home session management function network element generates the first PCO based on the HR-SBO authorization information. For example, the home session management function network element determines, based on the HR-SBO authorization information carried in SDM information, that the HR-SBO PDU session is authorized, and further generates the first PCO based on the security information received from the visited session management function network element.

In another possible implementation, the home session management function network element may determine, based on the local policy and/or the user plane security policy of the PDU session, to generate the first PCO. For example, when the user plane security policy of the PDU session indicates that user plane integrity protection is not required, the home session management function network element may determine that the first PCO includes the security information. For another example, when the local policy indicates that the user plane security policy of the PDU session indicates that user plane integrity protection is not required, the home session management function network element determines that the first PCO includes the security information.

In still another possible implementation, the home session management function network element receives policy information from the visited session management function network element, where the policy information indicates the trigger condition for the home session management function network element to send the security information to the terminal device; and the home session management function network element generates the first PCO based on the policy information.

For example, the trigger condition is as follows: When determining that the terminal device supports DNS over (D)TLS, the home session management function network element may provide the security information for the terminal device. In this case, the home session management function network element may determine, based on the second PCO received from the visited session management function network element, that the terminal device supports DNS over (D)TLS, and may be triggered to provide the security information for the terminal device. The security protocol supported by the terminal device and carried in the second PCO is DNS over (D)TLS.

For example, the trigger condition is as follows: When determining that the terminal device supports DNS over (D)TLS, and the user plane security policy of the PDU session indicates that integrity protection is not required or recommended, the home session management function network element may provide the security information for the terminal device. In this case, the home session management function network element determines, based on a locally configured user plane security policy of the PDU session, that integrity protection does not need to be enabled, may determine, based on the second PCO received from the visited session management function network element, that the terminal device supports DNS over (D)TLS, and may be triggered to provide the security information for the terminal device.

In still another possible implementation, the home session management function network element may determine, based on local configuration information, to generate the first PCO. For example, the home session management function network element obtains an H-DNS server, and determines, when the second PCO received from the visited session management function network element includes the DNS server security information indicator, that the generated first PCO includes security information of the corresponding H-DNS server. Further, the home session management function network element sends the HR-SBO authorization information to the visited session management function network element, and receives, from the visited session management function network element, the security information and the identifier of the DNS server, to generate the first PCO.

In still another possible implementation, the second PCO received by the home session management function network element from the visited session management function network element includes the DNS server security protocol support, and the home session management function network element generates the first PCO based on the DNS server security protocol support.

For example, the home session management function network element may determine based on terminal device security protocol support carried in the second PCO and the one or more security protocol types supported by the DNS server, to generate the first PCO. The first PCO includes the one or more security protocol types in the one or more security protocol types supported by both the DNS server and the terminal device.

In still another possible implementation, before the home session management function network element generates the first PCO, the home session management function network element receives the second PCO from the visited session management function network element, where the second PCO includes the indication information indicating that the terminal device supports security protocol-based security protection on a DNS message. The home session management function network element sends the request message to the visited session management function network element, where the request message includes the indication information indicating that the terminal device supports security protocol-based security protection on a DNS message. The home session management function network element receives the security information from the visited session management function network element, and further generates the first PCO.

Optionally, the home session management function network element may determine, based on the indication information that is carried in the second PCO received from the visited session management function network element and that indicates that the terminal device supports security protocol-based security protection on a DNS message, that the first PCO includes the security information.

Optionally, when the second PCO further includes the one or more security protocol types supported by the terminal device, the home session management function network element generates the first PCO based on the one or more security protocol types supported by the terminal device and carried in the second PCO and the one or more security protocol types supported by the DNS server, where the first PCO includes the one or more security protocol types in the one or more security protocol types supported by both the DNS server and the terminal device. S305: The home session management function network element sends the first PCO to the visited session management function network element.

Correspondingly, the visited session management function network element receives the first PCO from the home session management function network element.

For example, the home session management function network element sends the first PCO to the visited session management function network element in an Nsmf_ PDUSession_Creat Response message.

In an example, before the visited session management function network element receives the first PCO from the home session management function network element, the visited session management function network element sends, to the home session management function network element, the one or more security protocol types supported by the DNS server and/or the port number for establishing the secure connection. The first PCO further includes the one or more security protocol types in the one or more security protocol types supported by the DNS server and/or the port number.

It should be noted that the one or more security protocol types supported by the DNS server provided by the visited session management function network element may be the same as or different from the one or more security protocol types carried in the first PCO. This is not limited in this application. For example, security protocols supported by the DNS server provided by the visited session management function network element are a security protocol 1 and a security protocol 2, and the first PCO provided by the home session management function network element for the terminal device may include the security protocol 1 and/or the security protocol 2.

S306: The visited session management function network element sends the first PCO to the terminal device.

Correspondingly, the terminal device receives the first PCO from the visited session management function network element.

For example, the visited session management function network element (for example, the V-SMF) sends a PDU session Establishment Response message to the mobility management function network element (for example, the AMF) to send the first PCO, and the AMF sends a first PDU session establishment response message to the terminal device (for example, the UE) in an Nsmf_PDUSession_CreatSMContext Response message. For example, the V-SMF sends the first PCO to the AMF.

S307: The terminal device establishes the secure connection to the DNS server (for example, the V-EASDF) based on the security information.

For example, after the terminal device receives the security information of the DNS server, the terminal device transfers the security information to an upper layer. Further, when the UE determines to initiate the DNS discovery procedure, the terminal device establishes a secure (D)TLS connection to the DNS server based on the security information, and sends the DNS message based on the established secure (D)TLS connection. It should be understood that the DNS message is protected, so that secure communication between the terminal device and the DNS server can be ensured.

Optionally, in the foregoing technical solution of this application, an implementation in which the home session management function network element obtains the security information of the DNS server (for example, the V-EASDF) may further include the following content.

For example, the security information of the visited DNS server is preconfigured in the home session management function network element. The preconfiguration includes, for example, a V-PLMN ID 1 and security information of an associated V-EASDF, and for another example, a V-PLMN ID 2 and security information of an associated V-EASDF. For a same V-PLMN, security information of different V-EASDFs may be the same or may be different. When security information of different V-EASDFs is the same, the preconfiguration needs to include only a V-PLMN ID and security information of an associated V-EASDF. When the security information is different, an ID of a V-EASDF also needs to be stored in the preconfiguration. When determining that the home routing local breakout (home routed local breakout, HR-LBO) is authorized, the home session management function network element may determine, based on the received DNS server address, the indication information indicating that the terminal device supports security protocol-based security protection on a DNS message, the VPLMN ID, and the security protocol type supported by the DNS server, that the first PCO includes the security information of the V-EASDF.

For example, the security information of the visited DNS server (for example, the V-EASDF) is preconfigured in a UDM, for example, a V-PLMN ID 1 and security information of an associated V-EASDF, and for another example, a V-PLMN ID 2 and security information of an associated V-EASDF. When determining that HR-LBO is authorized, the home session management function network element may obtain the security information of the V-EASDF from the UDM based on a received V-PLMN ID of a visited network and/or a received V-EASDF address. For a same V-PLMN, security information of different V-EASDFs may be the same, or may be different. For a specific implementation, refer to the foregoing related descriptions.

It should be understood that a difference between the foregoing replacement method for obtaining the security information of the DNS server and the method 300 lies in that, in this optional implementation, the home session management function network element does not exchange information with the home session management function network element, and obtains the security information of the DNS server from the local preconfiguration or from the UDM. In addition, this implementation is also applicable to the following methods 400 to 800. For brevity, details are not described below.

In the solution provided in this application, the visited session management function network element exchanges the security information with the home session management function network element, and then the home session management function network element sends the security information to the terminal device, so that the terminal device can establish the secure connection to the DNS server based on the security information, thereby ensuring network communication security.

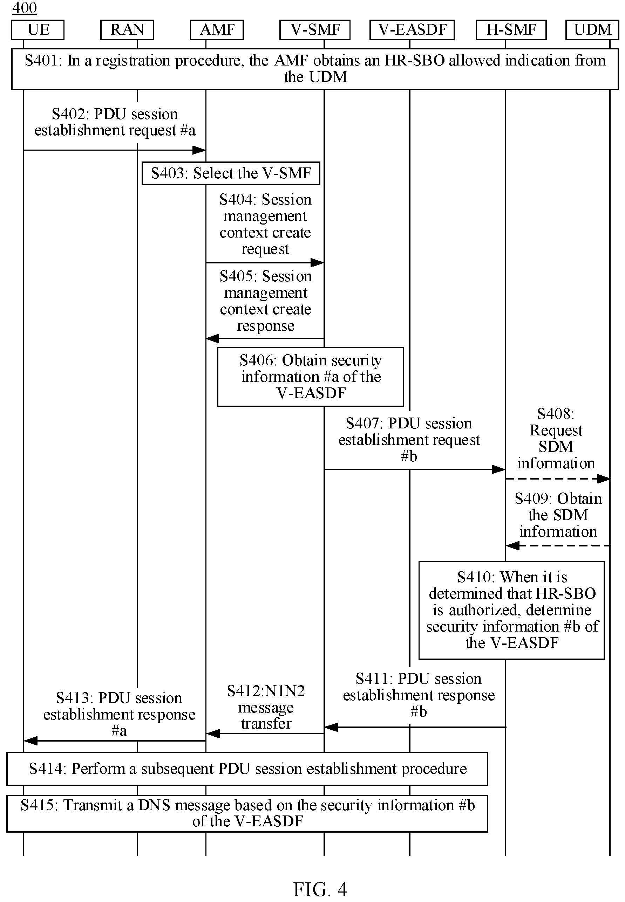

Next, an example in which the terminal device is UE, the visited edge application server discovery function network element is a V-EASDF, the visited session management function network element is a V-SMF, the home session management function network element is an H-SMF, the mobility management function network element is an AMF, and the unified data management function network element is a UDM is used to separately describe solutions of establishing a secure connection between the UE and the V-EASDF with reference to FIG. 4 to FIG. 8.

FIG. 4 is a schematic flowchart of a communication method 400 according to an embodiment of this application. In the method, in an HR-SBO PDU session establishment process, when determining to initiate an HR-SBO PDU session, a V-SMF provides both a V-EASDF address and security information #a of a V-EASDF to an H-SMF, so that the H-SMF can determine to send security information #b of the V-EASDF to UE, thereby reducing signaling overheads. As shown in FIG. 4, the method includes the following several steps.

S401: In a UE registration procedure, an AMF obtains an HR-SBO allowed indication from a UDM.

For a specific implementation of the registration procedure, refer to related descriptions of steps S201 to S204 in the method 200. For brevity, details are not described herein again.

S402: UE sends a PDU session establishment request #a to the AMF. Correspondingly, the AMF receives the PDU session establishment request #a from the UE.

For example, if the UE supports DNS over (D)TLS, the PDU session establishment request #a includes an ePCO #a, and the ePCO #a includes a DNS server security information indicator. Optionally, the ePCO #a may further include DNS server security protocol support, to indicate a security protocol type supported by the UE.

S403: The AMF selects a V-SMF.

S404: The AMF sends a session management context create request to the V-SMF. Correspondingly, the V-SMF receives the session management context create request from the AMF.

S405: The V-SMF sends a session management context create response to the AMF. Correspondingly, the AMF receives the session management context create response from the V-SMF.

For specific implementations of steps S402 to S405 and specific names or meanings of the exchanged messages, refer to related descriptions of steps S205 to S207 in the method 200. For brevity, details are not described herein again.

S406: The V-SMF obtains security information #a of a V-EASDF.

The security information #a may include an authentication credential, that is, a credential for authenticating the V-EASDF. Optionally, the security information #a may further include information about a security protocol supported by the V-EASDF (or a security mechanism supported by the V-EASDF), a port number, and/or the like.

In an example, if the HR-SBO allowed indication is included in step S404, the V-SMF selects a V-EASDF that supports HR-SBO, and obtains security information #a of the V-EASDF and a V-EASDF address. For example, the V-SMF obtains a V-EASDF instance identifier, the V-EASDF address, and the security information #a locally or from an NRF. For another example, the V-SMF first obtains a V-EASDF instance identifier locally or from an NRF, then obtains the V-EASDF address from an address resolver based on the V-EASDF instance identifier, and obtains the security information #a locally or from the V-EASDF or another storage network element based on the V-EASDF instance identifier. For another example, the V-SMF first obtains a V-EASDF instance identifier and the security information #a locally or from an NRF, and then obtains the V-EASDF address from an address resolver based on the V-EASDF instance identifier.

In another example, if the HR-SBO allowed indication is not included in step S404, the V-SMF may determine, based on a local policy, to select a V-EASDF, and obtain security information #a of the V-EASDF and a V-EASDF address.

For example, the local policy includes HR-SBO information supported or allowed per DNN/S-NSSAI. In this case, the V-SMF may determine, from the HR-SBO information supported or allowed per DNN/S-NSSAI in the local policy, whether DNN/S-NSSAI carried in the PDU session establishment request #a in step S402 supports or allows HR-SBO, to select the V-EASDF, and obtain the security information #a of the V-EASDF and the V-EASDF address. For example, the V-SMF obtains a V-EASDF instance identifier, the V-EASDF address, and the security information #a locally or from an NRF. For another example, the V-SMF first obtains a V-EASDF instance identifier locally or from an NRF, then obtains the V-EASDF address from an address resolver based on the V-EASDF instance identifier, and obtains the security information #a locally or from the V-EASDF or another storage network element based on the V-EASDF instance identifier. For another example, the V-SMF first obtains a V-EASDF instance identifier and the security information #a locally or from an NRF, and then obtains the V-EASDF address from an address resolver based on the V-EASDF instance identifier.

Optionally, the local policy may further include PLMN information, to indicate that an HR-SBO service may be provided for users of which PLMN. In this case, the V-SMF may determine whether the UE belongs to the PLMN, to be specific, whether an HPLMN of the UE is the PLMN or the UE is a subscriber of the PLMN. If the UE does not belong to the PLMN, the V-SMF skips discovery of the V-EASDF. If the UE belongs to the PLMN, the V-SMF selects a V-EASDF that supports HR-SBO.

Optionally, the local policies provided above may be implemented independently, or may be implemented in combination. For example, the V-SMF needs to determine whether the UE belongs to the PLMN and whether the DNN/S-NSSAI requested by the UE supports or allows HR-SBO. The V-SMF performs step S406 only when determining that the UE belongs to the PLMN and the DNN/S-NSSAI requested by the UE supports or allows HR-SBO.

Optionally, in the foregoing example, the V-SMF may determine the security information #a of the V-EASDF based on an identifier of the HPLMN of the UE. Therefore, in this implementation, different security information of the V-EASDF may be determined for different HPLMNs. That is, for the UE in different HPLMNs, credentials for authenticating the V-EASDF are different.

Optionally, the V-SMF may further obtain policy information #a, and send the policy information #a to the H-SMF in step S407, so that the H-SMF determines whether to provide the security information #a of the V-EASDF for the UE. For example, the policy information #a indicates that when the UE supports DNS over (D)TLS, the H-SMF may provide the security information of the V-EASDF for the UE. For another example, the policy information #a indicates that when the UE supports DNS over (D)TLS and a user plane security policy of a PDU session indicates that integrity protection is not required, the H-SMF may provide the security information of the V-EASDF for the UE. It should be understood that the policy information #a is merely an example provided for ease of understanding of the solution, and the policy information #a is not specifically limited in this embodiment of this application.

S407: The V-SMF sends a PDU session establishment request #b to the H-SMF. Correspondingly, the H-SMF receives the PDU session establishment request #b from the V-SMF.

The PDU session establishment request #b includes the ePCO #a, the security information #a of the V-EASDF, and the V-EASDF address.

Optionally, if the V-SMF obtains the policy information #a in step S406, the PDU session establishment request #b may carry the policy information #a.

S408: The H-SMF requests SDM information from the UDM. Correspondingly, the UDM receives a request for the SDM information from the H-SMF.

S409: The UDM sends the SDM information to the H-SMF. Correspondingly, the H-SMF receives the SDM information from the UDM.

For specific implementations of steps S408 and S409 and specific names or meanings of the exchanged messages, refer to related descriptions of steps S209 and S210 in the method 200. For brevity, details are not described herein again.

S410: When determining that HR-SBO is authorized, the H-SMF determines security information #b (that is, an example of the security information) of the V-EASDF.

The security information #b may include an authentication credential, that is, a credential for authenticating the V-EASDF. Optionally, the security information #b may further include information about a security protocol supported by the V-EASDF (or a security mechanism supported by the V-EASDF), a port number, and/or the like.

For example, the H-SMF determines, based on an HR-SBO authorization indication and/or HR-SBO authorization information carried in the SDM information in step S409, that an HR-SBO PDU session is authorized.

Further, the H-SMF determines to generate an ePCO #b including the security information #b of the V-EASDF. In addition, the ePCO #b further includes the V-EASDF address.

In an example, the H-SMF may determine, based on the DNS server security information indicator included in the ePCO #a received in step S407, that the ePCO #b includes the security information #b of the V-EASDF.

In another example, the H-SMF may determine, based on a local policy and/or the user plane security policy of the PDU session, that the ePCO #b includes the security information #b of the V-EASDF. For example, when the user plane security policy of the PDU session indicates that user plane integrity protection is not required, the H-SMF determines that the ePCO #b includes the security information #b of the V-EASDF. For another example, when the local policy indicates that the user plane security policy of the PDU session indicates that user plane integrity protection is not required, the H-SMF determines that the ePCO #b includes the security information #b of the V-EASDF.

In still another example, alternatively, if the PDU session establishment request #b in step S407 carries the policy information #a, the H-SMF may determine, based on the policy information #a, that the ePCO #b includes the security information #b of the V-EASDF. For example, the policy information #a indicates that when the UE supports DNS over (D)TLS, DNS over (D)TLS is used, and the user plane security policy of the PDU session does not need to be considered. In this case, when it is determined that HR-SBO is authorized, and the ePCO #a from the UE includes the DNS server security information indicator, the H-SMF may determine that the ePCO #b includes the security information #b of the V-EASDF. For another example, the policy information #a indicates that DNS over (D)TLS is used when the user plane security policy of the PDU session indicates that user plane integrity protection is not required. In this case, the H-SMF may determine that the ePCO #b includes the security information #b of the V-EASDF.

In still another example, if the ePCO #a received in step S407 includes the DNS server security protocol support, the H-SMF may determine a finally used security protocol based on the DNS server security protocol support carried in the ePCO #a and security protocol information carried in the security information #a, received in step S407, of the V-EASDF, and include, as a part of the security information #b of the V-EASDF, the DNS server security protocol in the ePCO #b.

It should be understood that the foregoing is merely an example provided for ease of understanding, and should not constitute any limitation on the technical solutions of this application.

Optionally, the security information #b of the V-EASDF may be the same as or different from the security information #a of the V-EASDF. Specifically, the security information #b of the V-EASDF is included in the security information #a of the V-EASDF, or the security information #b of the V-EASDF is a subset of the security information #a of the V-EASDF. For example, the security information #b of the V-EASDF includes a credential 1 and a security protocol 1, and the security information #a of the V-EASDF includes the credential 1, the security protocol 1, and a security protocol 2.

S411: The H-SMF sends a PDU session establishment response #b to the V-SMF. Correspondingly, the V-SMF receives the PDU session establishment response #b from the H-SMF.

The PDU session establishment response #b includes the ePCO #b, and the ePCO #b includes the security information #b of the V-EASDF and the V-EASDF address.

Optionally, the PDU session establishment response #b may further include an HPLMN DNS server address (which may be referred to as an address of an H-DNS server for short), and the H-DNS server is configured to resolve an address of a specific application (for example, an application that can be routed by the HPLMN).

S412: The V-SMF sends N1N2 message transfer to the AMF. Correspondingly, the AMF receives the N1N2 message transfer from the V-SMF.

The N1N2 message transfer may be N1N2_MessageTransfer, the message includes an N1 SM container, the N1 SM container includes the ePCO #b, and the ePCO #b includes the security information #b of the V-EASDF and the V-EASDF address.

S413: The AMF sends a PDU session establishment response #a to the UE. Correspondingly, the UE receives the PDU session establishment response #a from the AMF.

The PDU session establishment response #a includes the N1 SM container, in other words, to provide the security information #b of the V-EASDF and the V-EASDF address for the UE.

S414: Perform a subsequent PDU session establishment process.

For a specific implementation of the PDU session establishment, refer to related descriptions in 3GPP TS23.502. For brevity, details are not described herein again.

S415: The UE sends a security protected DNS message to the V-EASDF by using the security information #b of the V-EASDF. Correspondingly, the V-EASDF receives the security protected DNS message from the UE.

For example, the UE receives the security information #b of the V-EASDF, and the UE transfers the security information #b to an upper layer. Further, the UE establishes a secure connection to the V-EASDF based on the security information #b of the V-EASDF, and sends the DNS message based on the established secure connection.

For example, when the UE determines to initiate a DNS discovery procedure, the UE may establish a (D)TLS connection based on the received security information #b of the V-EASDF, and send the DNS message through the (D)TLS connection. It should be understood that the DNS message is protected, so that secure communication between the UE and the V-EASDF can be ensured.

According to the method disclosed in this application, when determining, based on the HR-SBO allowed indication from the AMF or the local policy, to initiate the HR-SBO PDU session establishment process, the V-SMF selects the V-EASDF, obtains the security information #a of the V-EASDF, and sends both the V-EASDF address and the security information #a of the V-EASDF to the H-SMF. When determining that the requested HR-SBO PDU session is authorized, the H-SMF can determine, based on the DNS server security information indicator in the ePCO #a from the UE and the security information #a of the V-EASDF from the V-SMF, to send the ePCO #b including the security information #b of the V-EASDF to the UE. Based on this implementation, the DNS message exchanged between the V-EASDF and the UE can be protected, and secure network communication can be maintained.

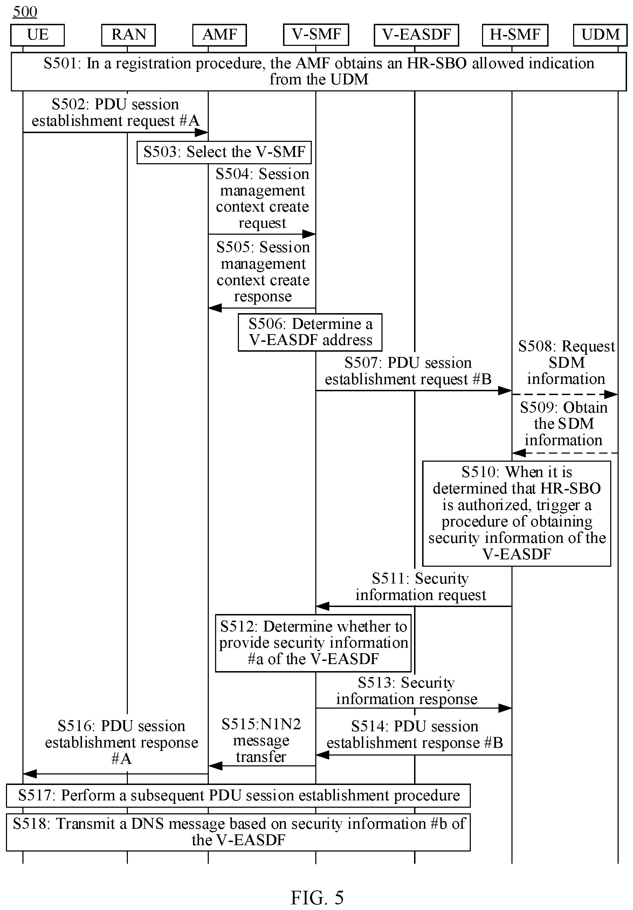

FIG. 5 is a schematic flowchart of a communication method 500 according to an embodiment of this application. In the method, in an HR-SBO PDU session establishment process, an H-SMF proactively triggers obtaining of security information #a of a V-EASDF from a V-SMF, so that a network can obtain the security information #a as required. To be specific, the V-SMF provides the security information #a of the V-EASDF to the H-SMF based on a request of the H-SMF, so that the H-SMF can determine to send security information #b of the V-EASDF to UE. As shown in FIG. 5, the method includes the following several steps.

S501: In a UE registration procedure, an AMF obtains an HR-SBO allowed indication from a UDM.

S502: UE sends a PDU session establishment request #A to the AMF. Correspondingly, the AMF receives the PDU session establishment request #A from the UE.

For example, if the UE supports DNS over (D)TLS, the PDU session establishment request #A includes an ePCO #A, and the ePCO #A includes a DNS server security information indicator. Optionally, the ePCO #A may further include DNS server security protocol support.

S503: The AMF selects a V-SMF.

S504: The AMF sends a session management context create request to the V-SMF. Correspondingly, the V-SMF receives the session management context create request from the AMF.

S505: The V-SMF sends a session management context create response to the AMF. Correspondingly, the AMF receives the session management context create response from the V-SMF.

For specific implementations of steps S501 to S505 and specific names or meanings of the exchanged messages, refer to related descriptions of steps S401 to S405 in the method 400. For brevity, details are not described herein again.

S506: The V-SMF obtains a V-EASDF address.

In an example, if the HR-SBO allowed indication is included in step S504, the V-SMF selects a V-EASDF that supports HR-SBO, and obtains a V-EASDF address.

In another example, if the HR-SBO allowed indication is not included in step S504, the V-SMF may determine, based on a local policy, to select a V-EASDF, and obtain a V-EASDF address.

For example, the local policy includes HR-SBO information supported or allowed per DNN/S-NSSAI. Optionally, the local policy may further include PLMN information, to indicate that an HR-SBO service may be provided for users of which PLMN. For a specific implementation, refer to related descriptions of step S406 in the method 400. For brevity, details are not described herein again.

S507: The V-SMF sends a PDU session establishment request #B to an H-SMF. Correspondingly, the H-SMF receives the PDU session establishment request #B from the V-SMF.

The PDU session establishment request #B includes the ePCO #A and the V-EASDF address.

S508: The H-SMF requests SDM information from the UDM. Correspondingly, the UDM receives a request for the SDM information from the H-SMF.

S509: The UDM sends the SDM information to the H-SMF. Correspondingly, the H-SMF receives the SDM information from the UDM.

For specific implementations of steps S508 and S509 and specific names or meanings of the exchanged messages, refer to related descriptions of steps S408 and S409 in the method 400. For brevity, details are not described herein again.

S510: When determining that HR-SBO is authorized, the H-SMF triggers a procedure of obtaining security information of the V-EASDF.

For example, the H-SMF determines, based on an HR-SBO authorization indication and/or HR-SBO authorization information carried in the SDM information in step S509, that an HR-SBO PDU session is authorized. In addition, if the ePCO #A received in step S507 carries the DNS server security information indicator, the H-SMF triggers obtaining of security information #a of the V-EASDF from the V-SMF, that is, performs steps S511 to S513.

Optionally, when receiving the V-EASDF address from the V-SMF, the H-SMF may perform steps S511 to S513.

S511: The H-SMF sends a security information request to the V-SMF. Correspondingly, the V-SMF receives the security information request from the H-SMF.

For example, the security information request may be Nsmf_Info Request, that is, the message itself may indicate the H-SMF to request the security information #a of the V-EASDF from the V-SMF.

Optionally, the security information request includes one or more of the following: the DNS server security information indicator, a user plane security policy of the PDU session, an ID of an HPLMN, and the DNS server security protocol support.

S512: The V-SMF determines whether to provide the security information #a of the V-EASDF. In an example, the V-SMF determines, based on the security information request received in step S511, to use DNS over (D)TLS, and includes the security information #a of the V-EASDF in a security information response in step S513.

In another example, if the security information request in step S511 includes the DNS server security information indicator, the V-SMF may determine, based on the DNS server security information indicator, to use DNS over (D)TLS, and include the security information #a of the V-EASDF in a security information response in step S513.

In still another example, the V-SMF may determine, based on a local policy, whether to provide the security information #a of the V-EASDF. For example, if the local policy indicates that the UE supports DNS over (D)TLS, the V-SMF may determine, based on DNS over (D)TLS included in the ePCO #A carried in S507, to include the security information #a of the V-EASDF in a security information response in step S513.

In still another example, if the security information request in step S511 includes the user plane security policy of the PDU session, the V-SMF may determine, based on the user plane security policy of the PDU session, whether to provide the security information #a of the V-EASDF. For example, when the user plane security policy of the PDU session indicates that user plane integrity protection is not required, the V-SMF may determine to use DNS over (D)TLS, and include the security information #a of the V-EASDF in a security information response in step S513. Alternatively, if the user plane security policy of the PDU session indicates that user plane integrity protection is required, the V-SMF may not provide the security information #a of the V-EASDF. In still another example, if the security information request in step S511 includes the ID of the HPLMN, the V-SMF may provide the security information #a of the V-EASDF based on the ID of the HPLMN. For example, the security information #a of the V-EASDF corresponding to the ID of the HPLMN is obtained, where the security information #a is for securely exchanging a message between a subscriber in a PLMN corresponding to the ID of the HPLMN and the V-EASDF.

In still another example, if the security information request in step S511 includes the DNS server security protocol support, the V-SMF may determine, based on the DNS server security protocol support, to provide the security information #a of the V-EASDF.

It should be noted that the examples provided above may be implemented independently, or may be implemented in combination. For example, the V-SMF may determine, based on the local policy and the user plane security policy of the PDU session, whether to provide the security information #a of the V-EASDF. For example, the local policy indicates that the V-SMF may provide the security information #a of the V-EASDF only when the user plane security policy of the PDU session indicates that user plane integrity protection is not required. For example, the V-SMF may determine, based on the local policy and the ID of the HPLMN, whether to provide the security information #a of the V-EASDF. For example, the local policy indicates that when the UE supports DNS over (D)TLS and the UE belongs to the HPLMN, the V-SMF may provide the security information #a securely exchanged between a user in the corresponding PLMN and the V-EASDF. It should be understood that the foregoing is merely an example provided for ease of understanding, and should not constitute any limitation on the technical solutions of this application.

S513: The V-SMF sends a security information response to the H-SMF. Correspondingly, the H-SMF receives the security information response from the V-SMF.

The security information response carries the security information #a of the V-EASDF.

For example, based on determining in step S512, if it is determined that the security information #a of the V-EASDF needs to be provided, the V-SMF sends an Nsmf_Info response to the H-SMF, where the Nsmf_Info response includes the security information #a of the V-EASDF.

S514: The H-SMF sends a PDU session establishment response #B to the V-SMF. Correspondingly, the V-SMF receives the PDU session establishment response #B from the H-SMF.

S515: The V-SMF sends N1N2 message transfer to the AMF. Correspondingly, the AMF receives the N1N2 message transfer from the V-SMF.

S516: The AMF sends a PDU session establishment response #A to the UE. Correspondingly, the UE receives the PDU session establishment response #A from the AMF.

S517: Perform a subsequent PDU session establishment process.

S518: The UE sends a security protected DNS message to the V-EASDF by using the security information #b of the V-EASDF. Correspondingly, the V-EASDF receives the security protected DNS message from the UE.

For example, the UE receives the security information #b of the V-EASDF, and the UE transfers the security information #b to an upper layer. Further, the UE establishes a secure connection to the V-EASDF based on the security information #b of the V-EASDF, and sends the DNS message based on the established secure connection.

For specific implementations of steps S514 to S518 and specific names of the exchanged messages, refer to related descriptions of steps S411 to S415 in the method 400. For brevity, details are not described herein again.

According to the method disclosed in this application, in the HR-SBO PDU session establishment process, when receiving the DNS server security information indicator from the UE and determining that the requested HR-SBO PDU session is authorized, the H-SMF requests the security information #a of the V-EASDF from the V-SMF. The V-SMF determines, based on a request message from the H-SMF, the local policy, and/or the user plane security policy of the PDU session, to send the security information #a of the V-EASDF to the H-SMF, so that the H-SMF can send the ePCO #B including the security information #b of the V-EASDF to the UE. Based on this implementation, the DNS message exchanged between the V-EASDF and the UE can be protected, and secure network communication can be maintained.

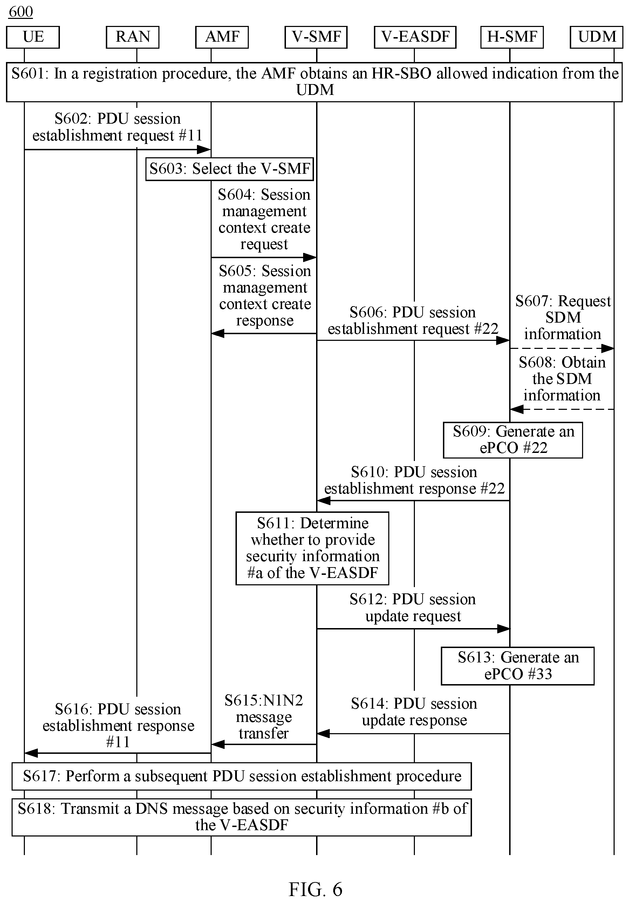

FIG. 6 is a schematic flowchart of a communication method 600 according to an embodiment of this application. In the method, in an HR-SBO PDU session establishment process, when receiving an HR-SBO authorization indication from an H-SMF and determining to initiate an HR-SBO PDU session, a V-SMF provides security information #a of a V-EASDF to the H-SMF, so that the H-SMF can determine to send security information #b of the V-EASDF to UE. Obtaining the security information #a based on the HR-SBO authorization indication can ensure subsequent secure communication between the UE and the V-EASDF. As shown in FIG. 6, the method includes the following several steps.

S601: In a UE registration procedure, an AMF obtains an HR-SBO allowed indication from a UDM.

S602: UE sends a PDU session establishment request #11 to the AMF. Correspondingly, the AMF receives the PDU session establishment request #11 from the UE.

S603: The AMF selects a V-SMF.

S604: The AMF sends a session management context create request to the V-SMF. Correspondingly, the V-SMF receives the session management context create request from the AMF.

S605: The V-SMF sends a session management context create response to the AMF. Correspondingly, the AMF receives the session management context create response from the V-SMF.

For specific implementations of steps S601 to S605 and specific names or meanings of the exchanged messages, refer to related descriptions of steps S401 to S405 in the method 400. For brevity, details are not described herein again.

S606: The V-SMF sends a PDU session establishment request #22 to an H-SMF. Correspondingly, the H-SMF receives the PDU session establishment request #22 from the V-SMF.

The PDU session establishment request #22 includes an ePCO #11.

S607: The H-SMF requests SDM information from the UDM. Correspondingly, the UDM receives a request for the SDM information from the H-SMF.

S608: The UDM sends the SDM information to the H-SMF. Correspondingly, the H-SMF receives the SDM information from the UDM.

For specific implementations of steps S601 to S608 and specific names or meanings of the exchanged messages, refer to related descriptions of steps S401 to S405 and S407 to S409 in the method 400. For brevity, details are not described herein again.

S609: The H-SMF generates an ePCO #22.

For example, the H-SMF determines, based on an HR-SBO authorization indication and/or HR-SBO authorization information carried in the SDM information in step S608, that an HR-SBO PDU session is authorized, and further generates the ePCO #22. The ePCO #22 includes security information of an H-DNS server and an address of the H-DNS server.

In an example, the H-SMF may obtain the H-DNS server based on local configuration information; and when the ePCO #11 in step S606 includes a DNS server security information indicator, determine that the ePCO #22 includes the security information of the corresponding H-DNS server. In another example, the H-SMF may determine, based on a local policy and/or a user plane security policy of the PDU session, that the ePCO #22 includes the security information of the corresponding H-DNS server.

In still another example, alternatively, if the PDU session establishment request #22 in step S606 carries policy information #a, the H-SMF may determine, based on the policy information #a, that the ePCO #22 includes the security information of the corresponding H-DNS server.

In still another example, if the ePCO #11 carried in the PDU session establishment request #22 in step S606 includes DNS server security protocol support, the H-SMF may determine, based on the DNS server security protocol support carried in the ePCO #11, to include, as a part of the security information of the H-DNS server, the DNS server security protocol in the ePCO #22.

It should be understood that the foregoing is merely an example provided for ease of understanding, and should not constitute any limitation on the technical solutions of this application. For specific determining logic and an implementation, refer to related descriptions of step S410 in the method 400. For brevity, details are not described herein again.

S610: The H-SMF sends a PDU session establishment response #22 to the V-SMF. Correspondingly, the V-SMF receives the PDU session establishment response #22 from the H-SMF.

The PDU session establishment response #22 includes the ePCO #22.

Optionally, if the H-SMF determines, based on the SDM information in step S608, that HR-SBO is authorized, the PDU session establishment response #22 may further include the HR-SBO authorization indication or the HR-SBO authorization information. If the ePCO #11 received by the H-SMF in step S606 includes the DNS server security information indicator and/or the DNS server security protocol support, the PDU session establishment response #22 may further include the DNS server security information indicator and/or the DNS server security protocol support.

Optionally, the PDU session establishment response #22 may further include the user plane security policy of the PDU session.

S611: The V-SMF determines whether to provide security information #a of a V-EASDF.

For specific determining logic and an implementation, refer to related descriptions of step S512 in the method 500. For brevity, details are not described herein again.

S612: The V-SMF sends a PDU session update request to the H-SMF. Correspondingly, the H-SMF receives the PDU session update request from the V-SMF.

For example, the PDU session update request may be an Nsmf_PDUSession_update request. The PDU session update request includes the security information #a of the V-EASDF and an address of the V-EASDF. For a specific implementation in which the V-SMF obtains the address of the V-EASDF, refer to related descriptions of step S506 in the method 500. For brevity, details are not described herein again.

S613: The H-SMF generates an ePCO #33.

The ePCO #33 includes the address of the V-EASDF and security information #b of the V-EASDF. It should be noted that if the PDU session establishment response #22 in step S610 does not include the DNS server security information indicator, the H-SMF may determine, based on the DNS server security information indicator carried in the ePCO #11 received in step S606, the security information #b of the V-EASDF sent to the UE. Further, if the ePCO #11 received in step S606 carries the DNS server security protocol support, the H-SMF may determine, based on the DNS server security protocol support, the security information #b of the V-EASDF sent to the UE.

S614: The H-SMF sends a PDU session update response to the V-SMF. Correspondingly, the V-SMF receives the PDU session update response from the H-SMF.

For example, the PDU session update response may be Nsmf_PDUSession_update. The PDU session update response includes the ePCO #33.

Optionally, names in steps S612 and S614 are merely examples provided for ease of understanding, and should not constitute any limitation on this application. In other words, the PDU session update request message and the PDU session update response message may also be replaced with other service messages.

S615: The V-SMF sends N1N2 message transfer to the AMF. Correspondingly, the AMF receives the N1N2 message transfer from the V-SMF.

S616: The AMF sends a PDU session establishment response #11 to the UE. Correspondingly, the UE receives the PDU session establishment response #11 from the AMF.

S617: Perform a subsequent PDU session establishment process.

S618: The UE sends a security protected DNS message to the V-EASDF by using the security information #b of the V-EASDF. Correspondingly, the V-EASDF receives the security protected DNS message from the UE.

For specific implementations of steps S615 to S618 and specific names of the exchanged messages, refer to related descriptions of steps S412 to S415 in the method 400. For brevity, details are not described herein again.

According to the method disclosed in this application, when the V-SMF determines, based on the

HR-SBO authorization indication from the H-SMF, to initiate the HR-SBO PDU session, the V-SMF sends the address of the V-EASDF and the security information #a of the V-EASDF to the H-SMF, so that the H-SMF can send the ePCO #33 including the security information #b of the V-EASDF to the UE. Based on this implementation, the DNS message exchanged between the V-EASDF and the UE can be protected, and secure network communication can be maintained.

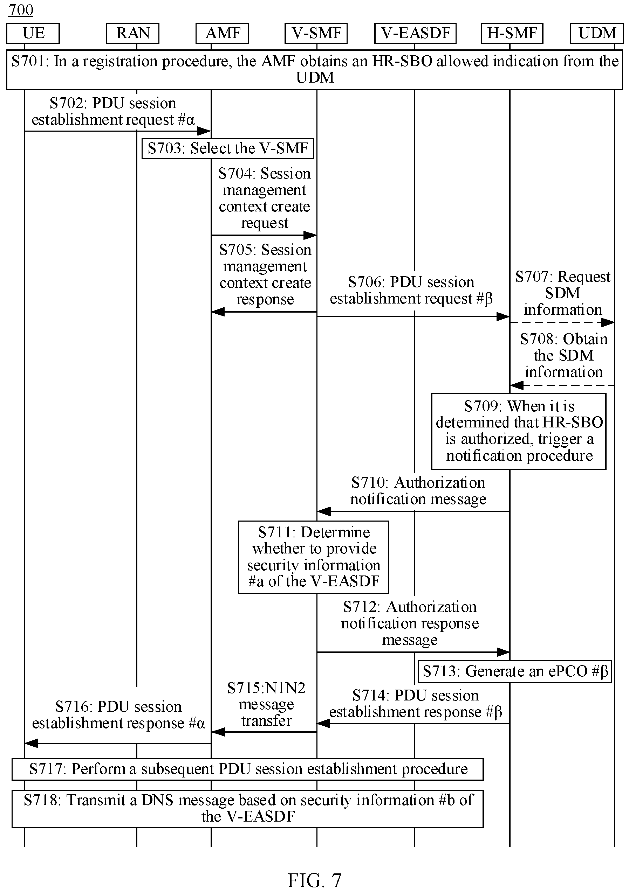

FIG. 7 is a schematic flowchart of a communication method 700 according to an embodiment of this application. In the method, in an HR-SBO PDU session establishment process, an H-SMF initiates a notification procedure to a V-SMF when determining that HR-SBO is authorized, so that the V-SMF provides security information #a of a V-EASDF when determining to request HR-SBO, and further, the H-SMF can determine to send security information #b of the V-EASDF to UE. As shown in FIG. 7, the method includes the following several steps.

S701: In a UE registration procedure, an AMF obtains an HR-SBO allowed indication from a UDM.

S702: UE sends a PDU session establishment request #α to the AMF. Correspondingly, the AMF receives the PDU session establishment request #α from the UE.

S703: The AMF selects a V-SMF.

S704: The AMF sends a session management context create request to the V-SMF. Correspondingly, the V-SMF receives the session management context create request from the AMF.

S705: The V-SMF sends a session management context create response to the AMF. Correspondingly, the AMF receives the session management context create response from the V-SMF.

S706: The V-SMF sends a PDU session establishment request #β to an H-SMF. Correspondingly, the H-SMF receives the PDU session establishment request #β from the V-SMF.

S707: The H-SMF requests SDM information from the UDM. Correspondingly, the UDM receives a request for the SDM information from the H-SMF.

S708: The UDM sends the SDM information to the H-SMF. Correspondingly, the H-SMF receives the SDM information from the UDM.

For specific implementations of steps S701 to S708 and specific names or meanings of the exchanged messages, refer to related descriptions of steps S601 to S608 in the method 600. For brevity, details are not described herein again.

S709: When determining that HR-SBO is authorized, the H-SMF triggers a notification procedure. For example, the H-SMF determines, based on an HR-SBO authorization indication and/or HR-SBO authorization information carried in the SDM information in step S708, that an HR-SBO PDU session is authorized, and then may perform step S710.

S710: The H-SMF sends an authorization notification message to the V-SMF. Correspondingly, the V-SMF receives the authorization notification message from the H-SMF.

For example, the authorization notification message may be an Nsmf_info_notify message. The authorization notification message includes the HR-SBO authorization indication or the HR-SBO authorization information.

Optionally, if an ePCO #α received by the H-SMF in step S706 includes a DNS server security information indicator, the authorization notification message may include the DNS server security information indicator. If the ePCO #α includes DNS server security protocol support, the authorization notification message may include the DNS server security protocol support.

S711: The V-SMF determines whether to provide security information #a of a V-EASDF.

For specific determining logic and an implementation, refer to related descriptions of step S512 in the method 500. For brevity, details are not described herein again.

S712: The V-SMF sends an authorization notification response message to the H-SMF. Correspondingly, the H-SMF receives the authorization notification response message from the V-SMF.

The authorization notification response message includes the security information #a of the V-EASDF and an address of the V-EASDF.

S713: The H-SMF generates an ePCO #β.

The ePCO #β includes security information #b of the V-EASDF and the address of the V-EASDF. For a specific implementation, refer to related descriptions of step S613 in the method 600. For brevity, details are not described herein again.

S714: The H-SMF sends a PDU session establishment response to the V-SMF. Correspondingly, the V-SMF receives the PDU session establishment response from the H-SMF.

For example, the PDU session establishment response may be Nsmf_PDUSession_Creat Response. The PDU session establishment response includes the ePCO #β.

S715: The V-SMF sends N1N2 message transfer to the AMF. Correspondingly, the AMF receives the N1N2 message transfer from the V-SMF.

S716: The AMF sends a PDU session establishment response #α to the UE. Correspondingly, the UE receives the PDU session establishment response #α from the AMF.

S717: Perform a subsequent PDU session establishment process.

S718: The UE sends a security protected DNS message to the V-EASDF by using the security information #b of the V-EASDF. Correspondingly, the V-EASDF receives the security protected DNS message from the UE.

For specific implementations of steps S714 to S718 and specific names of the exchanged messages, refer to related descriptions of steps S614 to S618 in the method 600. For brevity, details are not described herein again.

According to the method disclosed in this application, in the HR-SBO PDU session establishment process, the V-SMF provides the security information #a of the V-EASDF to the H-SMF based on the HR-SBO authorization indication from the H-SMF, so that when DNS over (D)TLS needs to be enabled, the H-SMF can send the ePCO #β including the security information #b of the V-EASDF to the UE. Based on this implementation, a secure connection between the V-EASDF and the UE can be protected, and secure network communication can be maintained.

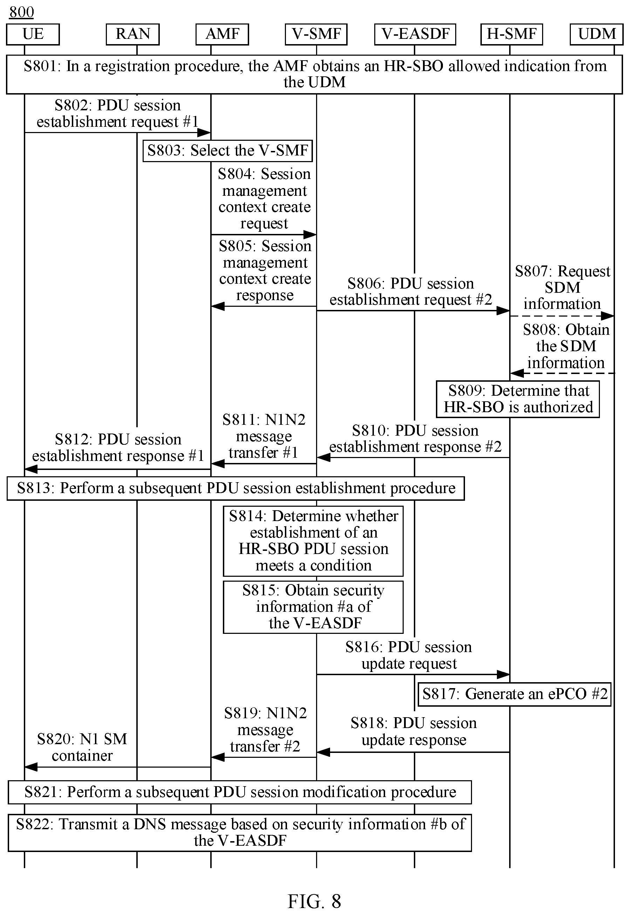

FIG. 8 is a schematic flowchart of a communication method 800 according to an embodiment of this application. In the method, in an HR-SBO PDU session establishment process, when determining that HR-SBO is authorized, an H-SMF sends an HR-SBO authorization indication to a V-SMF, so that the V-SMF subsequently provides security information #a of a V-EASDF to the H-SMF when determining that an HR-SBO PDU session needs to be requested, and further, the H-SMF can determine to send security information #b of the V-EASDF to UE. The security information #a is determined and obtained based on HR-SBO authorization information from the home session management function network element and when it is determined that the UE meets an HR-SBO session establishment condition. Therefore, security is higher. As shown in FIG. 8, the method includes the following several steps.

S801: In a UE registration procedure, an AMF obtains an HR-SBO allowed indication from a UDM.

S802: UE sends a PDU session establishment request #1 to the AMF. Correspondingly, the AMF receives the PDU session establishment request #1 from the UE.

S803: The AMF selects a V-SMF.

S804: The AMF sends a session management context create request to the V-SMF. Correspondingly, the V-SMF receives the session management context create request from the AMF.

S805: The V-SMF sends a session management context create response to the AMF. Correspondingly, the AMF receives the session management context create response from the V-SMF.

S806: The V-SMF sends a PDU session establishment request #2 to an H-SMF. Correspondingly, the H-SMF receives the PDU session establishment request #2 from the V-SMF.

S807: The H-SMF requests SDM information from the UDM. Correspondingly, the UDM receives a request for the SDM information from the H-SMF.

S808: The UDM sends the SDM information to the H-SMF. Correspondingly, the H-SMF receives the SDM information from the UDM.

For specific implementations of steps S801 to S808 and specific names or meanings of the exchanged messages, refer to related descriptions of steps S601 to S608 in the method 600. For brevity, details are not described herein again.

S809: The H-SMF determines that HR-SBO is authorized.

For example, the H-SMF determines, based on an HR-SBO authorization indication or HR-SBO authorization information in the SDM information from the UDM, that HR-SBO is authorized.

S810: The H-SMF sends a PDU session establishment response #2 to the V-SMF. Correspondingly, the V-SMF receives the PDU session establishment response #2 from the H-SMF.

The PDU session establishment response #2 includes the HR-SBO authorization indication or the HR-SBO authorization information. Further, the V-SMF locally stores the HR-SBO authorization indication or the HR-SBO authorization information, so that the V-SMF subsequently provides security information #a of a V-EASDF to the H-SMF when determining that an HR-SBO PDU session is required.

Optionally, if an ePCO #1 received by the H-SMF in step S806 includes a DNS server security information indicator and/or DNS server security protocol support, the PDU session establishment response #2 may further include the DNS server security information indicator and/or the DNS server security protocol support. Further, the V-SMF may locally store the DNS server security information indicator and/or the DNS server security protocol support.

Optionally, the PDU session establishment response #2 may further include an address of an H-DNS server and/or security information of the H-DNS server, to resolve an address of a specific application (for example, an application that can be routed by an HPLMN).

Optionally, the PDU session establishment response #2 may further include a user plane security policy of the PDU session. Further, the V-SMF may locally store the user plane security policy of the PDU session.

S811: The V-SMF sends N1N2 message transfer #1 to the AMF. Correspondingly, the AMF receives the N1N2 message transfer #1 from the V-SMF.

S812: The AMF sends a PDU session establishment response #1 to the UE. Correspondingly, the UE receives the PDU session establishment response #1 from the AMF.

S813: Perform a subsequent PDU session establishment process.

For specific implementations of steps S811 to S813, refer to related descriptions of steps S615 to S617 in the method 600. For brevity, details are not described herein again.

S814: The V-SMF determines whether establishment of the HR-SBO PDU session meets a condition.

For example, the V-SMF determines, based on location information of the UE from the AMF, that the UE has currently moved to a service area of an EHE (that is, the V-EASDF). In addition, the V-SMF locally stores the HR-SBO authorization indication after step S810. Therefore, the V-SMF may determine that establishment of the HR-SBO PDU session meets the condition, and then may obtain the security information #a of the V-EASDF and provide the security information #a for the H-SMF.

S815: The V-SMF obtains security information #a of the V-EASDF.

For a specific implementation of obtaining the security information #a of the V-EASDF and specific content included in the security information #a of the V-EASDF, refer to related descriptions of step S406 in the method 400. For brevity, details are not described herein again.

S816: The V-SMF sends a PDU session update request to the H-SMF. Correspondingly, the H-SMF receives the PDU session update request from the V-SMF.

S817: The H-SMF generates an ePCO #2.

S818: The H-SMF sends a PDU session update response to the V-SMF. Correspondingly, the V-SMF receives the PDU session update response from the H-SMF.

For specific implementations of steps S816 to S818 and names or meanings of the exchanged messages, refer to related descriptions of steps S612 to S614 in the method 600. For brevity, details are not described herein again.

S819: The V-SMF sends N1N2 message transfer to the AMF. Correspondingly, the AMF receives the N1N2 message transfer from the V-SMF.

The N1N2 message transfer may be N1N2_MessageTransfer, the message includes an N1 SM container, the N1 SM container includes the ePCO #2, and the ePCO #2 includes security information #b of the V-EASDF and a V-EASDF address.

S820: The AMF sends the N1 SM container to the UE. Correspondingly, the UE receives the N1 SM container from the AMF.

S821: Perform a subsequent PDU session modification process.

For a specific implementation of the PDU session modification, refer to related descriptions in 3GPP TS23.502. For brevity, details are not described herein again.

S822: The UE sends a security protected DNS message to the V-EASDF by using the security information #b of the V-EASDF. Correspondingly, the V-EASDF receives the security protected DNS message from the UE.

It should be understood that the DNS message is protected, so that secure communication between the UE and the V-EASDF can be ensured.

According to the method disclosed in this application, based on the HR-SBO authorization indication or the HR-SBO authorization information sent by the H-SMF, the V-SMF may provide the security information #a of the V-EASDF to the H-SMF when determining that establishment of the HR-SBO PDU session meets the condition, so that the H-SMF can send the ePCO #2 including the security information #b of the V-EASDF to the UE when DNS over (D)TLS needs to be enabled. Based on this implementation, a secure connection between the V-EASDF and the UE can be protected, and secure network communication can be maintained.

It should be noted that the technical solutions provided in this application are also applicable to another roaming scenario, for example, a roaming scenario supported by a future stand-alone non-public network (stand-alone non-public network, SNPN) architecture. A difference lies in that the V-SMF and the H-SMF in the PLMN shown in FIG. 1 need to be replaced separately with SMFs in different private networks in the SNPN.

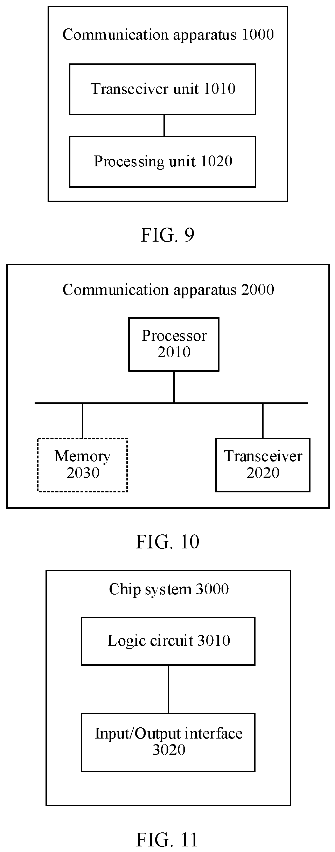

With reference to FIG. 1 to FIG. 8, the foregoing describes in detail embodiments on the communication method side provided in this application. With reference to FIG. 9 and FIG. 10, the following describes in detail embodiments on a terminal device side in this application. It should be understood that descriptions of the apparatus embodiments correspond to the descriptions of the method embodiments. Therefore, for a part that is not described in detail, refer to the foregoing method embodiments.

FIG. 9 is a block diagram of a terminal device 1000 according to an embodiment of this application. As shown in FIG. 9, the device 1000 may include a transceiver unit 1010 and a processing unit 1020. The transceiver unit 1010 may communicate with the outside, and the processing unit 1020 is configured to process data. The transceiver unit 1010 may also be referred to as a communication interface or a transceiver unit.

In a possible design, the device 1000 may implement steps or procedures corresponding to a communication apparatus (for example, the UE) in the foregoing method embodiments. The processing unit 1020 is configured to perform processing related operations of the UE in the foregoing method embodiments, and the transceiver unit 1010 is configured to perform receiving and sending related operations of the UE in the foregoing method embodiments.

In another possible design, the device 1000 may implement steps or procedures performed by the visited session management function network element (for example, the V-SMF) in the foregoing method embodiments. The transceiver unit 1010 is configured to perform receiving and sending related operations of the V-SMF in the foregoing method embodiments, and the processing unit 1020 is configured to perform processing related operations of the V-SMF in the foregoing method embodiments.

In still another possible design, the device 1000 may implement steps or procedures performed by the home session management function network element (for example, the H-SMF) in the foregoing method embodiments. The transceiver unit 1010 is configured to perform receiving and sending related operations of the H-SMF in the foregoing method embodiments, and the processing unit 1020 is configured to perform processing related operations of the H-SMF in the foregoing method embodiments.

It should be understood that the device 1000 herein is implemented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the device 1000 may be specifically a transmit end in the foregoing embodiments, and may be configured to perform procedures and/or steps corresponding to the transmit end in the foregoing method embodiments; or the device 1000 may be specifically a receiving end in the foregoing embodiments, and may be configured to perform procedures and/or steps corresponding to the receiving end in the foregoing method embodiments. To avoid repetition, details are not described herein again.

The device 1000 in the foregoing solutions has a function of implementing corresponding steps performed by the transmitting end in the foregoing methods. Alternatively, the device 1000 in the foregoing solutions has a function of implementing corresponding steps performed by the receiving end in the foregoing methods. The function may be implemented by hardware, or may be implemented by hardware executing corresponding software. The hardware or the software includes one or more modules corresponding to the foregoing functions. For example, the transceiver unit may be replaced by a transceiver machine (for example, a sending unit in the transceiver unit may be replaced by a transmitter machine, and a receiving unit in the transceiver unit may be replaced by a receiver machine), and another unit, for example, the processing unit, may be replaced by a processor, to separately perform receiving and sending operations and related processing operations in the method embodiments.

In addition, the transceiver unit may alternatively be a transceiver circuit (for example, may include a receiving circuit and a sending circuit), and the processing unit may be a processing circuit. In this embodiment of this application, the apparatus in FIG. 9 may be the receiving end or the transmitting end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 10 is a block diagram of another terminal device 2000 according to an embodiment of this application. As shown in FIG. 10, the device 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the device 2000 may further include a memory 2030. The memory 2030 communicates with the processor 2010 and the transceiver 2020 through the internal connection path. The memory 2030 is configured to store instructions, and the processor 2010 may execute the instructions stored in the memory 2030.

In a possible implementation, the device 2000 is configured to implement procedures and steps corresponding to the communication apparatus (for example, the UE) in the foregoing method embodiments.

In another possible implementation, the device 2000 is configured to implement procedures and steps corresponding to the visited session management function network element (for example, the V-SMF) in the foregoing method embodiments.

In still another possible implementation, the device 2000 is configured to implement procedures and steps corresponding to the home session management function network element (for example, the H-SMF) in the foregoing method embodiments.

It should be understood that the device 2000 may be specifically a transmitting end or a receiving end in the foregoing embodiments, or may be a chip or a chip system. Correspondingly, the transceiver 2020 may be a transceiver circuit of the chip. This is not limited herein. Specifically, the device 2000 may be configured to perform steps and/or procedures corresponding to the transmitting end or the receiving end in the foregoing method embodiments.

Optionally, the memory 2030 may include a read-only memory and a random access memory, and provide instructions and data to the processor. A part of the memory may further include a nonvolatile random access memory. For example, the memory may further store information of a device type. The processor 2010 may be configured to execute the instructions stored in the memory. When the processor 2010 executes the instructions stored in the memory, the processor 2010 is configured to perform steps and/or procedures in the foregoing method embodiments corresponding to the transmitting end or the receiving end.

In an implementation process, steps in the foregoing methods can be implemented by using a hardware integrated logical circuit in the processor, or by using instructions in a form of software. The steps of the method disclosed with reference to embodiments of this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor, an application-specific integrated circuit, a field programmable gate array or another programmable logic device, a discrete gate or transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitation, many forms of RAMs are available, for example, a static random access memory, a dynamic random access memory, a synchronous dynamic random access memory, a double data rate synchronous dynamic random access memory, an enhanced synchronous dynamic random access memory, a synchlink dynamic random access memory, and a direct rambus random access memory. It should be noted that the memory of the systems and methods described in this specification includes but is not limited to these and any memory of another proper type.

FIG. 11 is a diagram of a chip system 3000 according to an embodiment of this application. The chip system 3000 (or may be referred to as a processing system) includes a logic circuit 3010 and an input/output interface (input/output interface) 3020.

The logic circuit 3010 may be a processing circuit in the chip system 3000. The logic circuit 3010 may be coupled and connected to a storage unit, and invoke instructions in the storage unit, so that the chip system 3000 can implement the methods and the functions in embodiments of this application. The input/output interface 3020 may be an input/output circuit in the chip system 3000, and outputs information processed by the chip system 3000, or inputs to-be-processed data or signaling information to the chip system 3000 for processing.

In a solution, the chip system 3000 is configured to implement operations performed by a communication apparatus (for example, the UE in FIG. 2 to FIG. 8) in the foregoing method embodiments. For example, the logic circuit 3010 is configured to implement processing related operations performed by the UE in the foregoing method embodiments, and the input/output interface 3020 is configured to implement a sending and/or receiving related operations performed by the UE in the foregoing method embodiments.

In another solution, the chip system 3000 is configured to implement operations performed by the visited session management function network element (for example, the V-SMF in FIG. 2 to FIG. 8) in the foregoing method embodiments. For example, the logic circuit 3010 is configured to implement processing related operations performed by the V-SMF in the foregoing method embodiments, and the input/output interface 3020 is configured to implement sending and/or receiving related operations performed by the V-SMF in the foregoing method embodiments.

In still another solution, the chip system 3000 is configured to implement operations performed by the visited session management function network element (for example, the H-SMF in FIG. 2 to FIG. 8) in the foregoing method embodiments. For example, the logic circuit 3010 is configured to implement processing related operations performed by the H-SMF in the foregoing method embodiments, and the input/output interface 3020 is configured to implement sending and/or receiving related operations performed by the H-SMF in the foregoing method embodiments.

An embodiment of this application further provides a computer-readable storage medium, where the computer-readable storage medium stores computer instructions for implementing the method performed by a device (for example, the UE, the V-SMF, or the H-SMF) in the foregoing method embodiments.

An embodiment of this application further provides a computer program product, including instructions. When the instructions are executed by a computer, the method performed by a device (for example, the UE, the V-SMF, or the H-SMF) in the foregoing method embodiments is implemented.

An embodiment of this application further provides a communication system, including one or more of the UE, the V-SMF, or the H-SMF described above.

For explanations and beneficial effects of related content in any one of the apparatuses provided above, refer to the corresponding method embodiment provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a process of establishing or modifying a session of a terminal device, and comprises:
obtaining, by a visited session management function network element, security information of a visited domain name system DNS server and an identifier of the DNS server, wherein the security information is for establishing a secure connection between the terminal device and the DNS server;
sending, by the visited session management function network element, the security information and the identifier of the DNS server to a home session management function network element;
receiving, by the visited session management function network element, a protocol configuration option PCO from the home session management function network element, wherein the PCO comprises the security information and the identifier of the DNS server; and
sending, by the visited session management function network element, the PCO to the terminal device.

2. The method according to claim 1, wherein the security information comprises a credential for authenticating the DNS server.

3. The method according to claim 2, wherein the security information further comprises one or more security protocol types supported by the DNS server and/or a port number for establishing the secure connection.

4. The method according to claim 2, wherein before receiving, by the visited session management function network element, the PCO from the home session management function network element, the method further comprises:
sending, by the visited session management function network element to the home session management function network element, one or more security protocol types supported by the DNS server and/or a port number for establishing the secure connection, wherein
the PCO further comprises one or more security protocol types in the one or more security protocol types supported by the DNS server and/or the port number.

5. The method according to any one of claims 1 to 4, wherein the PCO from the home session management function network element is a first PCO; and before obtaining, by the visited session management function network element, the security information of the visited DNS server, the method further comprises:
receiving, by the visited session management function network element, a second PCO from the terminal device, wherein the second PCO comprises indication information indicating that the terminal device supports security protocol-based security protection on a DNS message;
sending, by the visited session management function network element, the second PCO to the home session management function network element; and
receiving, by the visited session management function network element, a request message from the home session management function network element, wherein the request message comprises the indication information; and
obtaining, by the visited session management function network element, the security information of the visited DNS server comprises:
obtaining, by the visited session management function network element, the security information in response to the indication information.

6. The method according to any one of claims 1 to 4, wherein before obtaining, by the visited session management function network element, the security information of the visited DNS server and the identifier of the DNS server, the method further comprises:
receiving, by the visited session management function network element, a home routed session breakout HR-SBO allowed indication from a mobility and access management function network element; and
obtaining, by the visited session management function network element, the security information of the visited DNS server and the identifier of the DNS server comprises:
obtaining, by the visited session management function network element, the security information and the identifier of the DNS server based on the HR-SBO allowed indication.

7. The method according to any one of claims 1 to 4, wherein before obtaining, by the visited session management function network element, the security information of the visited DNS server, the method further comprises:
receiving, by the visited session management function network element, a home network identity from the home session management function network element; and
obtaining, by the visited session management function network element, the security information of the visited DNS server comprises:
obtaining, by the visited session management function network element, the security information based on the network identity of the terminal device.

8. The method according to any one of claims 1 to 7, wherein the method further comprises:
obtaining, by the visited session management function network element, policy information, wherein the policy information indicates a trigger condition for the home session management function network element to send the security information to the terminal device; and
sending, by the visited session management function network element, the policy information to the home session management function network element.

9. The method according to any one of claims 1 to 4, wherein before obtaining, by the visited session management function network element, the security information of the visited DNS server, the method further comprises:
receiving, by the visited session management function network element, a user plane security policy that corresponds to the session and that is from the home session management function network element, wherein the user plane security policy indicates to disable or optionally enable user plane security protection; and
obtaining, by the visited session management function network element, the security information of the visited DNS server comprises:
obtaining, by the visited session management function network element, the security information based on the user plane security policy.

10. The method according to any one of claims 1 to 4, wherein before obtaining, by the visited session management function network element, the security information of the visited DNS server and the identifier of the DNS server, the method further comprises:
receiving, by the visited session management function network element, HR-SBO authorization information from the home session management function network element; and
obtaining, by the visited session management function network element, the security information of the visited DNS server and the identifier of the DNS server comprises:
obtaining, by the visited session management function network element, the security information and the identifier of the DNS server based on the HR-SBO authorization information.

11. The method according to claim 10, wherein obtaining, by the visited session management function network element, the security information and the identifier of the DNS server based on the HR-SBO authorization information comprises:
obtaining, by the visited session management function network element when determining that the terminal device meets an HR-SBO session establishment condition, the security information and the identifier of the DNS server based on the HR-SBO authorization information.

12. The method according to any one of claims 1 to 11, wherein the DNS server is an edge server discovery function network element.

13. The method according to any one of claims 1 to 12, wherein the method further comprises:
receiving, by the visited session management function network element, the security information from a network function repository function network element.

14. A communication method, wherein the method is applied to a process of establishing or modifying a session of a terminal device, and comprises:
receiving, by a home session management function network element, security information of a domain name system DNS server and an identifier of the DNS server from a visited session management function network element, wherein the security information is for establishing a secure connection between the terminal device and the DNS server;
generating, by the home session management function network element, a protocol configuration option PCO, wherein the PCO comprises the security information and the identifier of the DNS server; and
sending, by the home session management function network element, the PCO to the terminal device via the visited session management function network element.

15. The method according to claim 14, wherein the security information comprises a credential for authenticating the DNS server.

16. The method according to claim 15, wherein the security information further comprises one or more security protocol types supported by the DNS server and/or a port number for establishing the secure connection.

17. The method according to claim 15, wherein before sending, by the home session management function network element, the PCO to the visited session management function network element, the method further comprises:
receiving, by the home session management function network element from the visited session management function network element, one or more security protocol types supported by the DNS server and/or a port number for establishing the secure connection, wherein
the PCO further comprises one or more security protocol types in the one or more security protocol types supported by the DNS server and/or the port number.

18. The method according to any one of claims 14 to 17, wherein the method further comprises:
sending, by the home session management function network element, a subscriber data management request message to a unified data management function network element; and
receiving, by the home session management function network element, a subscriber data management response message from the unified data management function network element, wherein the subscriber data management response message comprises home routed session breakout HR-SBO authorization information; and
generating, by the home session management function network element, the PCO comprises:
generating, by the home session management function network element, the PCO in response to the HR-SBO authorization information.

19. The method according to any one of claims 14 to 18, wherein before receiving, by the home session management function network element, the security information of the DNS server from the visited session management function network element, the method further comprises:
sending, by the home session management function network element, the HR-SBO authorization information to the visited session management function network element, wherein the HR-SBO authorization information is for requesting the security information and the identifier of the DNS server.

20. The method according to any one of claims 14 to 18, wherein the PCO generated by the home session management function network element is a first PCO; and before generating, by the home session management function network element, the PCO, the method further comprises:
receiving, by the home session management function network element, a second PCO from the visited session management function network element, wherein the second PCO comprises indication information indicating that the terminal device supports security protocol-based security protection on a DNS message; and
sending, by the home session management function network element, a request message to the visited session management function network element, wherein the request message comprises the indication information.

21. The method according to claim 20, wherein the second PCO further comprises one or more security protocol types supported by the terminal device; and
generating, by the home session management function network element, the PCO comprises:
generating, by the home session management function network element, the first PCO based on the one or more security protocol types supported by the terminal device and the one or more security protocol types supported by the DNS server, wherein the first PCO further comprises one or more security protocol types supported by both the DNS server and the terminal device.

22. The method according to any one of claims 14 to 18, wherein before generating, by the home session management function network element, the PCO, the method further comprises:
sending, by the home session management function network element, a user plane security policy to the visited session management function network element, wherein the user plane security policy indicates to disable or optionally enable user plane security protection.

23. The method according to any one of claims 14 to 18, wherein before generating, by the home session management function network element, the PCO, the method further comprises:
sending, by the home session management function network element, a home network identity to the visited session management function network element.

24. The method according to any one of claims 14 to 22, wherein generating, by the home session management function network element, the PCO comprises:
receiving, by the home session management function network element, policy information from the visited session management function network element, wherein the policy information indicates a trigger condition for the home session management function network element to send the security information to the terminal device; and
generating, by the home session management function network element, the PCO when the trigger condition is met.

25. The method according to any one of claims 14 to 24, wherein the DNS server is an edge server discovery function network element.

26. A communication method, wherein the method is applied to a process of establishing or modifying a session of a terminal device, and comprises:
sending, by a communication apparatus, a second protocol configuration option PCO to a home session management function network element via a visited session management function network element, wherein the second PCO comprises indication information indicating that the communication apparatus supports security protocol-based security protection on a DNS message;
receiving, by the communication apparatus, a first PCO from the home session management function network element via the visited session management function network element, wherein the first PCO comprises security information and an identifier of a visited domain name system DNS server; and
establishing, by the communication apparatus, a secure connection to the DNS server based on the security information.

27. The method according to claim 26, wherein the security information comprises a credential for authenticating the DNS server.

28. The method according to claim 27, wherein the security information further comprises one or more security protocol types supported by the DNS server and/or a port number for establishing the secure connection.

29. The method according to any one of claims 26 to 28, wherein the second PCO further comprises one or more security protocol types supported by the communication apparatus; and
the first PCO further comprises one or more security protocol types in the one or more security protocol types supported by the DNS server.

30. The method according to any one of claims 24 to 27, wherein the DNS server is an edge server discovery function network element.

31. A communication method, wherein the method is applied to a process of establishing or modifying a session of a terminal device, and comprises:
obtaining, by a visited session management function network element, security information of a visited domain name system DNS server and an identifier of the DNS server, wherein the security information is for establishing a secure connection between the terminal device and the DNS server;
sending, by the visited session management function network element, the security information and the identifier of the DNS server to a home session management function network element, and receiving, by the home session management function network element, the security information and the identifier of the DNS server from the visited session management function network element;
generating, by the home session management function network element, a protocol configuration option PCO, wherein the PCO comprises the security information and the identifier of the DNS server;
sending, by the home session management function network element, the PCO to the visited session management function network element, and receiving, by the visited session management function network element, the PCO from the home session management function network element; and
sending, by the visited session management function network element, the PCO to the terminal device, and receiving, by the terminal device, the PCO from the visited session management function network element.

32. The method according to claim 31, wherein the method further comprises:
establishing, by the communication apparatus, a secure connection to the DNS server based on the security information.

33. The method according to claim 31 or 32, wherein the security information comprises a credential for authenticating the DNS server.

34. The method according to claim 33, wherein the security information further comprises one or more security protocol types supported by the DNS server and/or a port number for establishing the secure connection.

35. The method according to any one of claims 31 to 34, wherein before sending, by the home session management function network element, the PCO to the visited session management function network element, the method further comprises:
sending, by the visited session management function network element to the home session management function network element, the one or more security protocol types supported by the DNS server and/or the port number for establishing the secure connection; and receiving, by the home session management function network element from the visited session management function network element, the one or more security protocol types supported by the DNS server and/or the port number for establishing the secure connection, wherein
the PCO further comprises one or more security protocol types in the one or more security protocol types supported by the DNS server and/or the port number.

36. The method according to any one of claims 31 to 35, wherein the PCO generated by the home session management function network element is a first PCO; and before obtaining, by the visited session management function network element, the security information of the visited DNS server, the method further comprises:
sending, by the terminal device, a second PCO to the visited session management function network element, and receiving, by the visited session management function network element, the second PCO from the terminal device, wherein the second PCO comprises indication information indicating that the terminal device supports security protocol-based security protection on a DNS message;
sending, by the visited session management function network element, the second PCO to the home session management function network element, and receiving, by the home session management function network element, the second PCO from the visited session management function network element; and
sending, by the home session management function network element, a request message to the visited session management function network element, and receiving, by the visited session management function network element, the request message from the home session management function network element, wherein the request message comprises the indication information; and
obtaining, by the visited session management function network element, the security information of the visited DNS server comprises:
obtaining, by the visited session management function network element, the security information in response to the indication information.

37. The method according to claim 36, wherein the second PCO further comprises one or more security protocol types supported by the terminal device; and
generating, by the home session management function network element, the PCO comprises:
generating, by the home session management function network element, the first PCO based on the one or more security protocol types supported by the terminal device and the one or more security protocol types supported by the DNS server, wherein the first PCO further comprises one or more security protocol types supported by both the DNS server and the terminal device.

38. The method according to any one of claims 31 to 35, wherein before obtaining, by the visited session management function network element, the security information of the visited DNS server and the identifier of the DNS server, the method further comprises:
sending, by a mobility and access management function network element, a home routed session breakout HR-SBO allowed indication to the visited session management function network element, and receiving, by the visited session management function network element, the home routed session breakout HR-SBO allowed indication from the mobility and access management function network element; and
obtaining, by the visited session management function network element, the security information of the visited DNS server and the identifier of the DNS server comprises:
obtaining, by the visited session management function network element, the security information and the identifier of the DNS server based on the HR-SBO allowed indication.

39. The method according to any one of claims 31 to 35, wherein the method further comprises:
sending, by the home session management function network element, a subscriber data management request message to a unified data management function network element, and receiving, by the unified data management function network element, the subscriber data management request message from the home session management function network element; and
sending, by the unified data management function network element, a subscriber data management response message to the home session management function network element, and receiving, by the home session management function network element, the subscriber data management response message from the unified data management function network element, wherein the subscriber data management response message comprises HR-SBO authorization information; and
generating, by the home session management function network element, the PCO comprises:
generating, by the home session management function network element, the PCO in response to the HR-SBO authorization information.

40. The method according to claim 39, wherein before receiving, by the home session management function network element, the security information of the DNS server from the visited session management function network element, the method further comprises:
sending, by the home session management function network element, the HR-SBO authorization information to the visited session management function network element, and receiving, by the visited session management function network element, the HR-SBO authorization information from the home session management function network element, wherein the HR-SBO authorization information is for requesting the security information and the identifier of the DNS server; and
obtaining, by the visited session management function network element, the security information of the visited DNS server and the identifier of the DNS server comprises:
obtaining, by the visited session management function network element, the security information and the identifier of the DNS server based on the HR-SBO authorization information.

41. The method according to claim 40, wherein obtaining, by the visited session management function network element, the security information and the identifier of the DNS server based on the HR-SBO authorization information comprises:
obtaining, by the visited session management function network element when determining that the terminal device meets an HR-SBO session establishment condition, the security information and the identifier of the DNS server based on the HR-SBO authorization information.

42. The method according to any one of claims 31 to 41, wherein before obtaining, by the visited session management function network element, the security information of the visited DNS server, the method further comprises:
sending, by the home session management function network element, a user plane security policy to the visited session management function network element, and receiving, by the visited session management function network element, the user plane security policy from the home session management function network element, wherein the user plane security policy indicates to disable or optionally enable user plane security protection; and
obtaining, by the visited session management function network element, the security information of the visited DNS server comprises:
obtaining, by the visited session management function network element, the security information based on the user plane security policy.

43. The method according to any one of claims 31 to 41, wherein before obtaining, by the visited session management function network element, the security information of the visited DNS server, the method further comprises:
sending, by the home session management function network element, a home network identity to the visited session management function network element, and receiving, by the visited session management function network element, the home network identity from the home session management function network element; and
obtaining, by the visited session management function network element, the security information of the visited DNS server comprises:
obtaining, by the visited session management function network element, the security information based on the network identity of the terminal device.

44. The method according to any one of claims 31 to 43, wherein generating, by the home session management function network element, the PCO comprises:
obtaining, by the visited session management function network element, policy information, wherein the policy information indicates a trigger condition for the home session management function network element to send the security information to the terminal device;
sending, by the visited session management function network element, the policy information to the home session management function network element, and receiving, by the home session management function network element, the policy information from the visited session management function network element; and
generating, by the home session management function network element, the PCO when the trigger condition is met.

45. The method according to any one of claims 31 to 44, wherein the DNS server is an edge server discovery function network element.

46. A communication system, comprising a visited session management function network element and a home session management function network element, wherein the visited session management function network element is configured to perform the method according to any one of claims 1 to 13, and the home session management function network element is configured to perform the method according to any one of claims 14 to 25.

47. The communication system according to claim 46, wherein the communication system further comprises a terminal device, and the terminal device is configured to perform the method according to any one of claims 26 to 30.

48. A communication apparatus, comprising one or more functional modules, wherein the one or more functional modules or network elements are configured to perform the method according to any one of claims 1 to 13, the one or more functional modules or network elements are configured to perform the method according to any one of claims 14 to 25, or the one or more functional modules or network elements are configured to perform the method according to any one of claims 26 to 30.

49. A communication apparatus, comprising a processor, wherein the processor is coupled to a memory; and the processor is configured to execute a computer program stored in the memory, to enable the apparatus to perform the method according to any one of claims 1 to 13, enable the apparatus to perform the method according to any one of claims 14 to 25, or enable the apparatus to perform the method according to any one of claims 26 to 30.

50. A computer-readable storage medium, wherein the computer-readable storage medium stores computer program code or instructions; and when the computer program code or the instructions are run, a computer is enabled to perform the method according to any one of claims 1 to 13, a computer is enabled to perform the method according to any one of claims 14 to 25, or a computer is enabled to perform the method according to any one of claims 26 to 30.

51. A computer program product, wherein when the computer program product is executed by a communication apparatus, the method according to any one of claims 1 to 13 is implemented, the method according to any one of claims 14 to 25 is implemented, or the method according to any one of claims 26 to 30 is implemented.

52. A chip, comprising a processor, configured to invoke a computer program from a memory and run the computer program, to enable a communication apparatus in which the chip is installed to perform the method according to any one of claims 1 to 13, enable a communication apparatus in which the chip is installed to perform the method according to any one of claims 14 to 25, or enable a communication apparatus in which the chip is installed to perform the method according to any one of claims 26 to 30.
